# EUROPÄISCHE PATENTSCHRIFT

(11) **EP 4 176 244 B1**
(45) Veröffentlichungstag und Bekanntmachung des Hinweises auf die Patenterteilung: **28.10.2026**
(21) Anmeldenummer: 21742756.6
(22) Anmeldetag: 02.07.2021
(51) Int. Cl.: G01N 21/33, G01N 21/64, G01N 21/77

(54) **NANOZEOLITHE UND DEREN ANALYTISCHE VERWENDUNG ALS CHEMOSENSOREN IN BIORELEVANTEN MEDIEN**
NANOZEOLITES AND THEIR ANALYTICAL USE AS CHEMOSENSORS IN BIORELEVANT MEDIA
NANOZÉOLITES ET LEUR UTILISATION ANALYTIQUE EN TANT QUE CHIMIOCAPTEURS DANS DES MILIEUX BIORÉACTIFS

(30) Priorität: 03.07.2020 DE 102020208359
(43) Veröffentlichungstag der Anmeldung: 10.05.2023
(73) Patentinhaber: Karlsruher Institut für Technologie, 76131 Karlsruhe (DE)
(72) Erfinder: BIEDERMANN, Frank, 76137 Karlsruhe (DE); GRIMM, Laura, 76761 Rülzheim (DE); SINN, Stephan, Lörrach 79539 (DE)
(74) Vertreter: Gille Hrabal Partnerschaftsgesellschaft mbB Patentanwälte
(86) Internationale Anmeldenummer: PCT/EP2021/068305
(87) Internationale Veröffentlichungsnummer: WO 2022/003149

(56) Entgegenhaltungen:
- EP-A1- 3 225 590
- US-A1- 2016 325 271
- LUKARSKA M ET AL: "Encapsulation of fluorescein into nanozeolites L and Y", MICROPOROUS AND MESOPOROUS MATERIALS, ELSEVIER, AMSTERDAM ,NL, vol. 260, 26 October 2017 (2017-10-26), pages 70 - 75, XP085350300, ISSN: 1387-1811, DOI: 10.1016/J.MICROMESO.2017.10.040
- AWALA HUSSEIN ET AL: "Template-free nanosized faujasite-type zeolites", NATURE MATERIALS, vol. 14, no. 4, 5 January 2015 (2015-01-05), London, pages 447 - 451, XP093110218, ISSN: 1476-1122, Retrieved from the Internet <URL:https://www.nature.com/articles/nmat4173> DOI: 10.1038/nmat4173
- GILLIES GLENN ET AL: "Fluorescence labelling as tool for zeolite particle tracking in nanoremediation approaches", SCIENCE OF THE TOTAL ENVIRONMENT, ELSEVIER, AMSTERDAM, NL, vol. 550, 2 February 2016 (2016-02-02), pages 820 - 826, XP029434412, ISSN: 0048-9697, DOI: 10.1016/J.SCITOTENV.2016.01.009
- DE RIDDER D J ET AL: "Zeolites for nitrosamine and pharmaceutical removal from demineralised and surface water: Mechanisms and efficacy", SEPARATION AND PURIFICATION TECHNOLOGY, ELSEVIER SCIENCE, AMSTERDAM, NL, vol. 89, 10 January 2012 (2012-01-10), pages 71 - 77, XP028469146, ISSN: 1383-5866, [retrieved on 20120117], DOI: 10.1016/J.SEPPUR.2012.01.025
- ZHU BO ET AL: "Designing hierarchical porous features of ZSM-5 zeolites via Si/Al ratio and their dynamic behavior in seawater ion complexes", MICROPOROUS AND MESOPOROUS MATERIALS, ELSEVIER, AMSTERDAM ,NL, vol. 173, 16 February 2013 (2013-02-16), pages 78 - 85, XP028544605, ISSN: 1387-1811, DOI: 10.1016/J.MICROMESO.2013.02.005
- KENGO SAKAGUCHI ET AL: "Applications of zeolite inorganic composites in biotechnology: current state and perspectives", APPLIED MICROBIOLOGY AND BIOTECHNOLOGY, SPRINGER, BERLIN, DE, vol. 67, no. 3, 1 May 2005 (2005-05-01), pages 306 - 311, XP019331812, ISSN: 1432-0614, DOI: 10.1007/S00253-004-1782-4

## Beschreibung

### Einleitung:

Die vorliegende Erfindung betrifft die Verwendung von monodispersen Nanozeolithen mit einer spezifischen Partikelgrößenverteilung in analytischen Bestimmungsverfahren, Verfahren zur qualitativen und quantitativen Bestimmung eines oder mehrerer neutraler, zwitterionischer oder positiv geladener biogener oder bioaktiver Moleküle und Wirkstoffe in einer Probe unter Verwendung derartiger Nanozeolithe sowie neue Chemosensoren auf Basis derartiger Nanozeolithe mit einer Dotierung mit funktionalisierten Farbstoffen oder Indikatoren.

### Hintergrund:

Die vorliegende Erfindung befasst sich mit analytischen Fragen und stellt ein neues Verfahren zur Bestimmung von biorelevanten Analyten (Bioanalyten), wie biogenen oder bioaktiven Molekülen und Wirkstoffen, in biorelevanten Medien mittels spektroskopischen Methoden bereit, basierend auf der Verwendung von monodispersen Nanozeolithen mit spezifischer Partikelgrößenverteilung. Die Erfindung betrifft außerdem neue Chemosensoren und deren Verwendung in entsprechenden Analyseverfahren sowie die Herstellung der monodispersen Nanozeolithe und der darauf basierenden Chemosensoren. Das erfindungsgemäße Verfahren erlaubt insbesondere auch eine Assay-basierte Detektion mit qualitativer und quantitativer Bestimmungsmöglichkeit von positiv geladenen, zwitterionischen und neutralen biogenen oder bioaktiven Molekülen und Wirkstoffen in biorelevanten Medien, wie salinen oder komplexen physiologischen Medien, mittels monodisperser Nanozeolithe mit spezifischer Partikelgrößenverteilung in spektroskopischen Messverfahren mittels Absorbanz oder Fluoreszenz.

Die Bereitstellung Assay-basierter Analyseverfahren ist von besonderem Interesse, da diese die Möglichkeit des Upscalings zu einem High-Throughput Screening (HPC) und damit der schnellen und massenhaften Analyse von Proben (> 100 000 pro Tag) bieten.

Insbesondere biorelevante Analyten werden in der Analytik und Diagnostik bisher entweder über aufwendige und zeitintensive, gekoppelte Trennverfahren wie HPLC- oder GC-MS oder proteinbasierte Assay-Verfahren nachgewiesen und quantifiziert. Etablierte Assay-basierte Verfahren beruhen jedoch auf der Anwendung hinreichend spezifischer Antigen-Antikörper Wechselwirkungen mit dem Nachteil der Limitierung auf Antigene als Analyten, wodurch zahlreiche körpereigene Substanzen, auf die keine Immunantwort existiert, mittels solcher Verfahren nicht nachweisbar sind. Des Weiteren ist die Herstellung von Antikörpern sehr kostenintensiv. Die Durchführung HPLC- oder GC-MS basierter Verfahren erfordert außerdem eine besondere technische Ausstattung sowie speziell geschultes Personal für die Testdurchführung. Heimanwendungen oder Schnelltests in Apotheken oder Arztpraxen sind damit nicht möglich. Vor diesem Hintergrund ist der Einsatz kostengünstigerer Materialien in Assay-basierten Analysen und die Bereitstellung vereinfachter Messmethoden sinnvoll und erstrebenswert.

### Stand der Technik:

Alternative Materialien in Assay-basierten Analysen wurden bereits in einigen Patentschriften wie in EP3225590A1 und in WO2019238805A1 beschrieben. Darin werden spezielle Analyseverfahren unter Verwendung von Chemosensoren aus der Gruppe Alumino-Silikatbasierter Trägermaterialien in Kombination mit Farbstoffen zum Nachweis von (köpereigenen) Neurotransmittern im Assay-Format beschrieben.

Konkret beschreibt EP3225590A1 die Verwendung Zeolith-basierter Chemosensoren zur Detektion von positiv geladenen Gastmolekülen, wobei die Detektion verschiedener positiv geladener Analyten mittels Emissionsspektroskopie erfolgt. Das Messverfahren basiert auf der Messung der Signalabnahme des mit dem Zeolithen konjugierten Farbstoffs aufgrund der Interaktion mit dem Analyten in Medien wie Wasser oder HEPES-Puffer. Dabei werden in dem darin beschriebenen Verfahren die Farbstoffmoleküle einzeln in die Kavitäten der Zeolithe eingeführt.

In der WO2019238805A1 werden Analyseverfahren auf Basis kompetitiver Bindungsreaktionen beschrieben.

Die in diesen Patentschriften beschriebenen Verfahren haben den Nachteil, dass je nach Größe der Farbstoffmoleküle und in Abhängigkeit vom Analysemedium die Farbstoffmoleküle aus den Kavitäten des Zeoliths herausgewaschen werden können.

CN107089905A offenbart einen Triethylamin-Fluoreszenzsensor, der auf einem L-Typ-Nanometer-Zeolith-Selteneerden-Beta-Keton-Komplex-Hybridmaterial basiert, sowie ein Herstellungsverfahren dafür und dessen Anwendung. Wenn Triethylamin und das L-Typ-Nanometer-Zeolith-Selteneerden-Beta-Keton-Komplex-Hybridmaterial miteinander reagieren, können Änderungen der Fluoreszenzintensität eines lumineszierenden Materials verursacht werden und Triethylamin kann durch Ausnutzung der Änderungen unterschieden und nachgewiesen werden. Der Sensor hat eine sehr schwache Empfindlichkeit gegenüber anderen organischen flüchtigen Substanzen und wird zur Anwendung im Bereich der Triethylamin-Gasdetektion beschrieben.

M. Lukarska et al. "Encapsulation of fluorescein into nanozeolithes L and Y", Microporous and Mesoporous Materials 260, 70-75, 2018 beschreiben modifizierte nano-Zeolithe (< 1000 nm) mit darin eingeschlossenen Fluorescein-Spezies, sowie die Untersuchung ihrer Fluoreszenzintensität.

T. Doussineau et al.: "Two-Dye Core/Shell Zeolite Nanoparticles: A New Tool for Ratiometric pH Measurements"; Advanced Functional Materials 19, 117-122, 2009 beschreibt die Herstellung von Kern/Schale-Nanosensoren bestehend aus einem Zeolithkern (polymorphes Zeolith Beta), der den Referenzfarbstoff 3-Hydroxyflavon enthält, und einer amorphen Silikaschale mit darin eingebettetem pH-sensitivem Fluorescein, sowie die Untersuchung der pH-Empfindlichkeit derselben mittels Steady-State-Fluoreszenzspektroskopie in Proben, die aus Suspensionen in gepufferten wässrigen Lösungen bestehen.

Die bislang verwendeten Chemosensoren in den bekannten Analyseverfahren sind außerdem auf Emission (Fluoreszenz) als Signal beschränkt, was auf Grund der unspezifischen Fluoreszenzspektrum-Charakteristika nicht die Unterscheidung von strukturell ähnlichen aber funktional unterschiedlichen Analyten, wie z.B. den Neurotransmittern Dopamin und Serotonin, erlaubt. Bezogen auf die Absorbanz ist nur die Messung von Festkörper-UV-Vis möglich. Die Detektion von neutralen Molekülen ist mit den bekannten Verfahren und den darin verwendeten Chemosensoren nicht möglich.

Zudem sind diese bekannten Verfahren auf niedersaline Bestimmungsmedien, d.h. "Minimalpuffer", beschränkt und nicht stabil genug für die Anwendung in salinen, biorelevanten Medien wie physiologischen Medien oder direkt in körpereigenen Flüssigkeiten, wie Blut, menschlichem Urin etc.. Sedimentation und Instabilität der Chemosensoren in biorelevanten Medien (salinen oder komplexen Medien wie z.B. Blut oder menschlichem Urin) limitiert die Anwendbarkeit deutlich. Die bisherigen Alumino-Silikat-basierten Chemosensoren mit einer polydispersen Partikelverteilung im Mikrometerbereich sind nachteilig, da sie eine signifikante Sedimentation zeigen. Dies führt zu Problemen mit der Basislinie durch negativen Drift (verursacht durch Sedimentation) und erzeugt Batch-zu-Batch Unterschiede mit verringerter Reproduzierbarkeit bei deren Einsatz in prototypischen Assays. Partikelgrößenabhängige Eigenschaften wie "Response time" werden ebenso in unvorteilhafter Weise durch polydisperse Chemosensor-Partikel beeinflusst. Um Alterungseffekte durch Sedimentation zu minimieren, müssen Dispersionen solcher polydisperser Alumino-Silikat-basierten Chemosensor-Partikel regelmäßig "frisch" hergestellt werden, was unter verfahrensökonomischen und Effizienz-Gesichtspunkten nachteilig ist.

Die Publikation von Li et al. "Bioconjugated Fluorescent Zeolite L Nanocrystals as Labels in Protein Microarrays"; small, 7, No. 22, 3193-3201, 2011 beschreibt die Verwendung von Zeolithen in Fluoreszenz-basierten Analyseverfahren, worin ein fluoreszenter Farbstoff in die Zeolith-L-Kavitäten geladen und anschließend die Silanolgruppen an der Außenseite der farbstoffbeladenen Zeolithpartikel in mehreren Schritten funktionalisiert werden, um ausgewählte Antikörper auf dieser zu immobilisieren. Das darin beschriebene Verfahren ist somit auf Protein-Microassays mit Antigen-Antikörper-Wechselwirkung beschränkt, wohingegen kleine Neurotransmitter, auf die keine direkte Bioantwort existiert, nicht detektieren werden können.

Die Publikation von Balwinder Kaur und Rajendra Srivastava "A polyaniline-zeolite nanocomposite material based acetylcholinesterase biosensor for the sensitive detection of acetylcholine and organophosphates"; New J. Chem., 39, 6899-6906, 2015 beschreibt ein Komposit eines Polyanilinfilms mit Zeolithen in Form eines mit einem leitenden Polymerfilm oberflächenbeschichteten Zeoliths, worin die porösen Zeolithe eine verbesserte Diffusion der Analyten in das Elektrodenmaterial des Polymerfilms gewährleisten. Dabei basiert das Messprinzip auf der sensitiven elektrochemischen Detektion von Acetylcholin am Polyanilinfilm. Andere Neurotransmitter werden nicht detektiert, jedoch wird die Detektion von Dopamin und Epinephrin in vorherigen Veröffentlichungen der Autoren erwähnt, die aber ebenfalls auf elektrochemischen Messungen basieren und nicht auf spektroskopischen Methoden und der Interaktion von Molekülen innerhalb der Zeolithkavitäten.

Die EP2089320B1 beschreibt ein Verfahren, worin Zeolith L mit spektroskopisch aktiven Molekülen beladen wird, welche unter Verwendung von Stoppern in den Zeolithkavitäten eingeschlossen werden. Anschließend werden biologische Erkennungseinheiten an den Zeolithen kovalent angebracht. Auch in diesem Verfahren basiert die Detektion der Analyten ausschließlich auf Antigen-Antikörper-Wechselwirkungen aufgrund der Verwendung von biologischen Erkennungseinheiten.

Eine spezielle Gruppe von Zeolithen, Faujasit-Zeolithe, mit spezifischen Si/Al-Verhältnissen und speziellen Partikelgrößenverteilungen wird in EP3089942B1 und in der darin zitierten US2010/304140 beschrieben. Allerdings offenbart keines dieser Dokumente eine Verwendung derartiger Faujasit-Zeolithe in analytischen Bestimmungsverfahren, sondern allenfalls als Katalysatoren oder Adsorptionsmittel in Gas-Feststoff- und Flüssig-Feststoff-Reaktionen.

### Aufgabenstellung:

Die Aufgabe der vorliegenden Erfindung bestand darin, ein neues Verfahren zur Bestimmung von biorelevanten Analyten bereitzustellen, welches die Nachteile der beschriebenen Verfahren nicht aufweist. Insbesondere bestand die Aufgabe der vorliegenden Erfindung darin, ein neues Verfahren zur qualitativen und/oder quantitativen Bestimmung positiv geladener, zwitterionischer und/oder neutraler biorelevanter Analyten bereitzustellen, also von Analyten aus der Gruppe der sogenannten Bioanalyten. Eine weitere Aufgabe der vorliegenden Erfindung bestand darin, ein neues Verfahren zur Bestimmung derartiger biorelevanter Analyten in Assay-basierten Bestimmungsmethoden bereitzustellen. Eine weitere Aufgabe der vorliegenden Erfindung bestand darin, ein neues Verfahren zur Bestimmung derartiger biorelevanter Analyten in salinen oder komplexen physiologischen Reaktionsmedien bereitzustellen. Eine weitere Aufgabe der vorliegenden Erfindung bestand darin, ein neues Verfahren zur Bestimmung derartiger biorelevanter Analyten mittels spektroskopischer Absorbanz- und/oder Fluoreszenz-basierter Verfahren, insbesondere für UV-Vis-basierte Verfahren, bereitzustellen. Eine weitere Aufgabe der Erfindung bestand darin, geeignete Chemosensoren zu entwickeln, die hinsichtlich der Eignung zur Bestimmung derartiger biorelevanter Analyten unter den genannten Bestimmungsbedingungen verbessert sind.

Diese Aufgaben wurden durch die in den Ansprüchen und die nachfolgend im Detail beschriebenen Ausführungsformen und Aspekte der Erfindung gelöst.

### Beschreibung der Erfindung:

Die vorliegende Erfindung wird nachfolgend näher beschrieben und umfasst insbesondere ein Verfahren zur Bestimmung neutraler, zwitterionischer und/oder positiv geladener Bioanalyten entsprechend Anspruch 1, monodisperse Nanozeolithe entsprechend Anspruch 12 und eine Verwendung der monodispersen Nanozeolithe zur Bestimmung neutraler, zwitterionischer und/oder positiv geladener Bioanalyten entsprechend Anspruch 14.

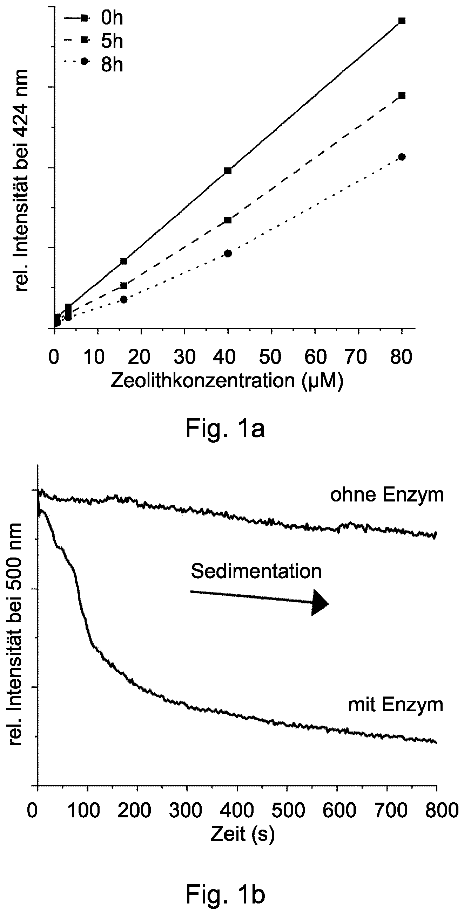

Die erfindungsgemäßen Zeolithe sind in wasserbasierten Medien unlöslich und können nur durch Dispergieren für einen begrenzten Zeitraum in flüssige Medien eingebracht werden. Bisher bekannte polydisperse Alumino-Silikat-basierte Chemosensoren sind aus diesem Grund nicht über einen längeren Zeitraum in einer Dispersionslösung wie z.B. einem wässrigen Reaktionsmedium stabil (Figur 1a). Langzeitmessungen, wie zum Beispiel die Verfolgung langsamer Enzymkinetiken, können nicht exakt abgebildet werden, da die Sedimentation des eingesetzten Zeolith-Chemosensor das Auslesesignal verfälscht (Figur 1b). Zudem müssen bereits hergestellte Zeolith-Wasser-Gemische vor jeder Benutzung neu dispergiert werden und um reproduzierbare Ergebnisse zu erzielen diese Dispersionen innerhalb weniger Minuten verwendet werden.

**Es wurde überraschend** gefunden, dass die Verwendung monodisperser Nanozeolithe mit einer spezifischen Partikelgrößenverteilung im Bereich von 5 bis 400 nm es ermöglicht, eine damit hergestellte Zeolith-Dispersion über mehrere Monate stabil zu lagern. Auch auf diesem Zeolith basierte Chemosensoren sind über den gleichen Zeitraum in Lösung lagerbar. In einem bevorzugten Aspekt der Erfindung liegt die Partikelgrößenverteilung der monodispersen Nanozeolithe im Bereich von 5 bis 400 nm, bevorzugter im Bereich von 10 bis 300 nm, noch bevorzugter im Bereich von 20 bis 200 nm, ganz besonders bevorzugt im Bereich von 40 bis 160 nm.

Die hier angegebenen numerischen Bereiche unterliegen gewissen Schwankungsbreiten, die in einem Bereich von ± 35 % nach oben und unten abweichen können.

Die Bestimmung der Partikelgrößenverteilung erfolgt mittels Dynamischer Lichtstreuung (dynamic light scattering, DLS), wie im Beispielteil im Detail beschrieben.

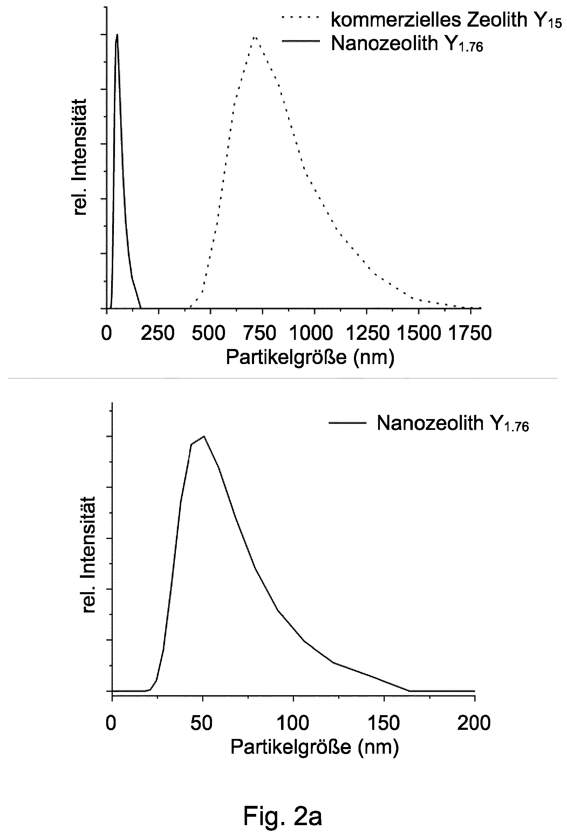

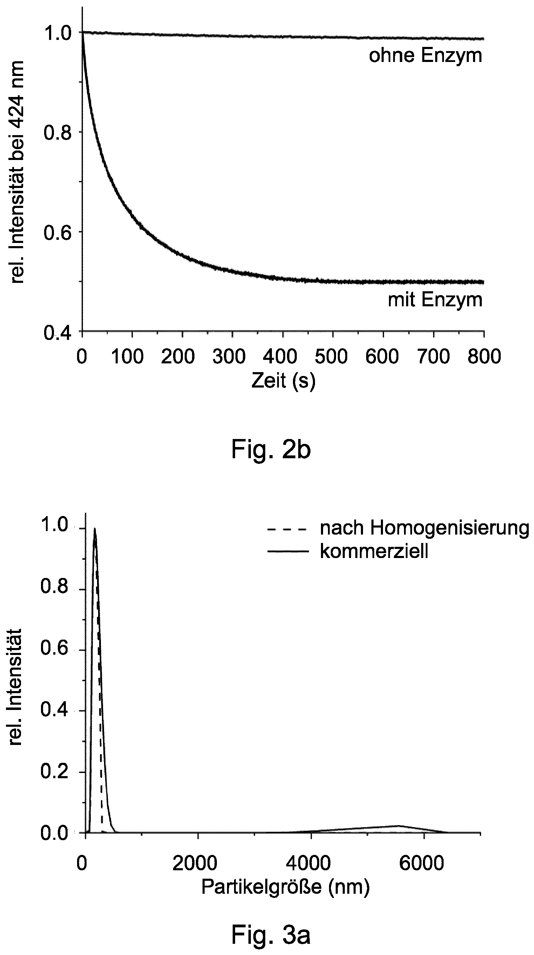

Durch die nahezu monodisperse Verteilung und die im Vergleich zu anderen Zeolithen geringe Partikelgröße reduziert sich die Sedimentationstendenz oder -geschwindigkeit der Nanozeolith-Partikel, so dass die Stabilität der Dispersionen erhöht, die Lagerfähigkeit verlängert und die Streuung im Analyseverfahren verringert wird (Figur 2a). Dieser Effekt kann mit Verringerung der Partikelgrößenverteilung und der Einstellung eines engeren Partikelgrößenverteilungsbereichs gesteigert werden. Die bei Verwendung der bisher bekannten Zeolithe erforderlichen Dispersionsverfahren wie Durchmischung durch Schütteln oder Sonicieren sind nicht mehr erforderlich. Dies erleichtert die Handhabung enorm, ermöglicht Upscaling-Prozesse und die Langzeitanwendung von auf Zeolithen basierten Chemosensoren. Diese sind wie die Nanozeolithe über Monate stabil in Lösung. Des Weiteren wird das Signal-Rausch-Verhältnis durch die höhere Homogenität der Dispersionen deutlich verbessert und die Detektionsuntergrenze dadurch erweitert (Figur 2b).

Die erfindungsgemäßen Nanozeolithe weisen ein Si/Al-Verhältnis im Bereich von 0,5 bis 50 auf, bevorzugt im Bereich von 1 bis 50, bevorzugter im Bereich von 1 bis 30, noch bevorzugter im Bereich von 1,5 bis 20. Ein Si/Al-Verhältnis von ≥ 1,5 hat sich als besonders vorteilhaft herausgestellt.

Für erfindungsgemäße Ausführungsformen, worin die zu bestimmenden Bioanalyten ausgewählt sind aus der Gruppe positiv geladener Bioanalyte haben sich monodisperse Nanozeolithe mit einem Si/Al-Verhältnis von ≥ 1,5, bevorzugter von ≥ 3 als besonders vorteilhaft gezeigt. Zur Bestimmung positiv geladener Bioanalyte ist ein Si/Al-Verhältnis von 0,5 bis 50, bevorzugt von 1 bis 50, oder ein Si/Al-Verhältnis von 1,5 bis 50, oder ein Si/Al-Verhältnis von 3 bis 50 bevorzugt. Bevorzugter ist ein Si/Al-Verhältnis von 1,76 bis 10, noch bevorzugter von 3 bis 10. Das geeignetste Si/Al-Verhältnis wird dabei in Bezug auf die konkreten Bedingungen des jeweiligen Analyseverfahrens ausgewählt.

Für erfindungsgemäße Ausführungsformen, worin die zu bestimmenden Bioanalyten ausgewählt sind aus der Gruppe neutraler oder zwitterionischer Bioanalyte haben sich monodisperse Nanozeolithe mit einem Si/Al-Verhältnis von ≥ 10, bevorzugter von ≥ 15 als besonders vorteilhaft erwiesen. Bevorzugt ist ein Si/Al-Verhältnis von 10 bis 20, bevorzugter von 15 bis 20. Das geeignetste Si/Al-Verhältnis wird dabei in Bezug auf die konkreten Bedingungen des jeweiligen Analyseverfahrens ausgewählt.

Zeolithen gemeinsam ist ein System von offenen Kanälen im Alumosilikatgerüst, durch das Gastmoleküle in die Struktur aufgenommen und wieder abgegeben werden können. Nach der Verknüpfung dieser Kanäle untereinander werden die Zeolithe in verschiedene Gruppen unterteilt, solche mit eindimensionalem System von Kanälen (die Kanäle sind untereinander nicht verbunden), solche mit einem zweidimensionalen System von Kanälen (die Kanäle sind untereinander zu einem schichtförmigen System verbunden) und solche mit einem dreidimensionalen System von Kanälen. Grundsätzlich können die erfindungsgemäßen Nanozeolithe aus allen dieser drei Gruppen ausgewählt werden, sofern sie sich für die erfindungsgemäße Verwendung eignen.

In einer bevorzugten Ausführungsform werden die erfindungsgemäßen Zeolithe ausgewählt aus der Gruppe der Faujasite, wie z.B. solchen wie in EP3089942 beschrieben, oder aus der Gruppe der LTL Zeolithe (LTL = Linde Typ L). Faujasite gehören zur Gruppe der Zeolithe mit dreidimensionalem System von Kanälen und kristallisieren kubisch mit Grundelementen des Faujasitgerüsts in Form von Sodalithkäfigen, die über hexagonale Prismen miteinander verbunden sind. Innerhalb der Gruppe der Faujasit-Zeolithe wird zwischen sogenannten X-Faujasiten, Y-Faujasiten und Mischungen von X- und Y-Faujasiten unterschieden, in Abhängigkeit vom jeweiligen Si/Al-Verhältnis. EP3089942 definiert für X-Faujasite ein Si/Al-Verhältnis von 1 bis 1,5 und für Y-Faujasite ein Si/Al-Verhältnis von > 1,5. Wikipedia.org hingegen definiert für X-Faujasite ein Si/Al-Verhältnis von 2 bis 3 und für Y-Faujasite von ≥ 3.

In einer weiteren bevorzugten Ausführungsform werden die erfindungsgemäßen Zeolithe ausgewählt aus der Gruppe der LTL Zeolithe, die zur Gruppe der Zeolithe mit eindimensionalem System von Kanälen gehören und hexagonal kristallisieren.

Für bestimmte hierin beschriebene erfindungsgemäße Ausführungsformen ist das Si/Al-Verhältnis maßgeblich und so werden für solche bevorzugte Ausführungsformen bevorzugt solche Faujasite oder LTL-Zeolithe ausgewählt, die ein Si/Al-Verhältnis in den hierin definierten Bereichen aufweisen. Eine mögliche Ausführungsform umfasst monodisperse Nanozeolithe aus der Gruppe der Faujasite oder der LTL-Zeolithe mit einer Partikelgröße von etwa 50 nm und einem Si/Al-Verhältnis von 1,76.

Die erfindungsgemäßen Nanozeolithe und darauf basierende neue Chemosensoren, wie nachfolgend näher beschrieben, können durch ein neues erfindungsgemäßes Verfahren aus bereits bekannten Zeolithen hergestellt werden, um so monodisperse Nanozeolithe und Chemosensoren mit den verbesserten Dispersionseigenschaften und erhöhter Stabilität bereitzustellen. Durch Einsatz von Ultraschall in Ultraschallbädern wird in der chemischen Laborarbeit das Mischen und Lösen von Substanzen realisiert. Dabei trifft der niederfrequente Schall über die Außenwände eines Probengefäßes indirekt auf die zu behandelnde Probe (Stoffgemisch, Probe in Lösung oder Dispersion). Die Anwendung von Ultraschall auf Zeolithmaterialien zur Erzielung einer feineren Verteilung ist dabei in ihrer Wirkung allerdings nur marginal und führt nicht zur Verkleinerung der Zeolith-Partikel. Es wurde überraschend gefunden, dass durch Einsatz eines Stabsonikators mit sehr hoher Schallintensität (Arbeitsfrequenz 30±1 kHz, Energiedichte ≥300 W cm²), welcher im direkten Kontakt mit dem zu behandelnden Zeolith-Material steht bei ausreichend langer Einwirkung zur Zerkleinerung und zur anschließenden feinen Verteilung der entstandenen Zeolithpartikel (Nanopartikel) führt. Durch dieses Verfahren können somit die erfindungsgemäßen Nanozeolithe mit der erfindungsgemäßen Partikelgrößenverteilung hergestellt werden.

Die Sonikation kann entweder direkt in dem zu analysierenden biologischen (physiologischen) Medium erfolgen, wie z.B. direkt im zu untersuchenden Urin, oder in einem geeigneten wässrigen Medium. Dadurch werden kolloidale Dispersionen der erfindungsgemäßen Nanozeolithe erhalten. Das mittels Sonikation mit hoher Schallintensität zerkleinerte Zeolithmaterial wird bevorzugt in Form einer kolloidalen Dispersion in einem wässrigen Medium, vorzugsweise in Wasser oder einem salinen Medium hergestellt, die dann für die Analyse dem zu untersuchenden Analysemedium (z.B. Urin, Blut etc., wie nachfolgend näher definiert) hinzugefügt wird.

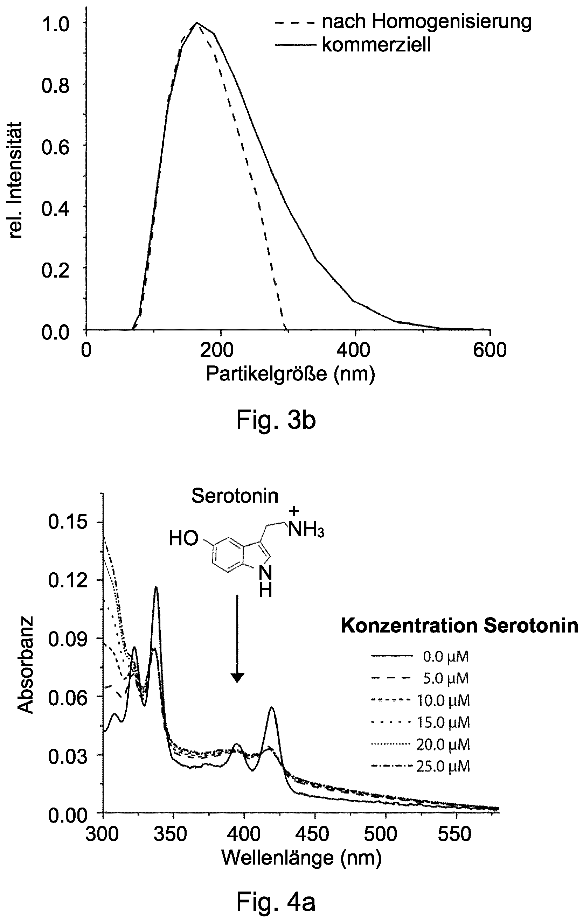

Um eine noch engere Partikelgrößenverteilung zu erhalten, was sich vorteilhaft auf die Reproduzierbarkeit der Analysen auswirkt, können die erhaltenen Dispersionen der Nanozeolith-Partikel zusätzlich mit Hochdruck durch spezielle Sterilfilter gepresst werden (Figur 3 verdeutlicht die Effekte der angewendeten Schritte). Wie vorstehend ausgeführt, wirkt sich die Zerkleinerung der Partikel und die engere Partikelgrößenverteilung vorteilhaft auf die (zeitliche) Stabilität, Lagerfähigkeit und Streuungseigenschaften daraus hergestellter Dispersionen aus.

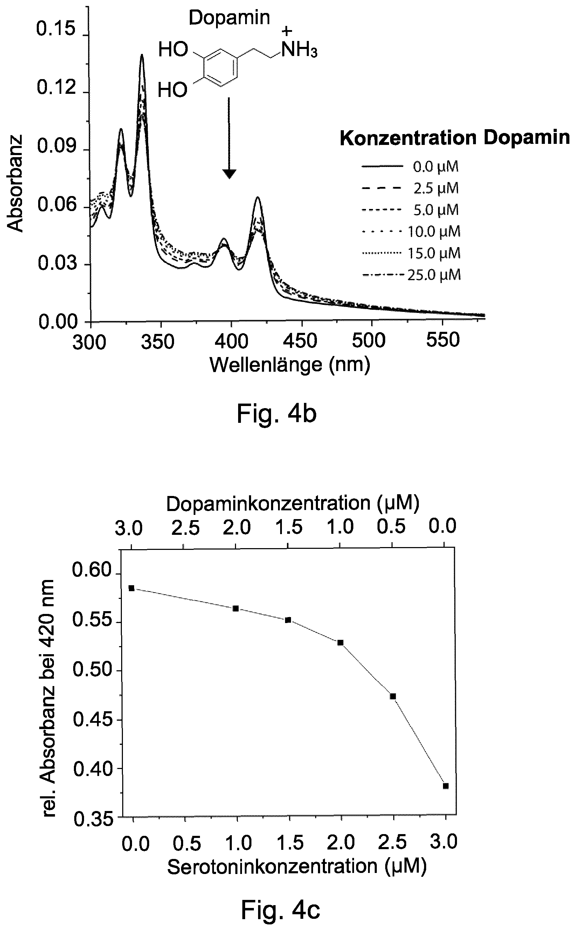

Bisher wird die Verwendung von Alumino-Silikat-basierten Chemosensoren in Analyseverfahren unter Verwendung von UV-Vis-Spektren nur mit getrockneten Material in der Festphase beschrieben, was keine praktikable Anwendung als Chemosensor in Assay-basierten Analyseverfahren und zur Analyse von körpereigenen Medien erlaubt. Analysen beispielsweise von Urin würden die Eintrocknung des Mediums mit den darin gelösten Analyten erfordern, was zeitintensiv ist. Festphasen-Absorptionsspektren zeigen auch starke, unerwünschte Streueffekte, die sich auf die Baseline auswirken. Messungen von UV-Vis Absorptionsspektren in Lösungen oder Dispersionen der bisher für solche Zwecke beschriebenen Zeolithe oder Chemosensoren in Wasser oder wässrigen Medien sind nicht möglich, da Streueffekte das gesamte Spektrum überdecken. Das erfindungsgemäße Verfahren mit der Verwendung der erfindungsgemäßen Nanozeolithe hat somit den weiteren Vorteil, dass instrumentell sehr einfache Absorptionsmessungen möglich werden, da nun erstmal mit Dispersion gearbeitet werden kann. Die resultierenden Spektren sind wesentlich informationsreicher als korrespondierende Emissionsspektren. Mit den erfindungsgemäßen kolloiden Dispersionen können Streueffekt-freie (aufgelöste) UV-Vis Absorptionsspektren erhalten werden (Figur 4a und b) und durch die Verfügbarkeit von aufgelösten Absorptionsspektren und den darin sichtbaren Analyt-spezifischen Charakteristika können nun auch Analytmischungen, wie zum Beispiel von Dopamin und Serotonin, detektiert und unterschieden werden (Figur 4c). Dies war zuvor in der Festphase nicht möglich.

Die Erfindung betrifft somit auch neue Verfahren zur Bestimmung neutraler, zwitterionischer und/oder positiv geladener Bioanalyten, wie nachfolgend beschrieben, durch UV-Vis- oder Fluoreszenzspektroskopie, unter Verwendung der erfindungsgemäßen monodispersen Nanozeolithe mit einer Partikelgrößenverteilung im Bereich von 5 bis 400 nm, wie hierin im Detail beschrieben. Die erfindungsgemäßen Bestimmungsverfahren sind bevorzugt für Assay-basierte Bestimmungen von Bioanalyten einsetzbar. Die Bestimmung der Bioanalyten erfolgt dabei mittels UV-Vis- oder Fluoreszenzspektroskopie, wobei ein bevorzugter Fokus auf der nun erstmals zugänglichen UV-Vis-Spektroskopie liegt.

In den erfindungsgemäßen Analyseverfahren, worin die hierin beschriebenen Nanozeolithe mit spezifischer Partikelgrößenverteilung verwendet werden, liegen die Nanozeolithe bevorzugt in Form einer Dispersion in einem wässrigen Medium vor. Es ist dabei maßgeblich, dass die Nanozeolithe monodispers verteilt vorliegen, wobei der Begriff "monodispers" im Sinne der Erfindung meint, dass die erfindungsgemäßen Nanozeolithe im Wesentlichen in Form von Nanopartikeln ("Nanozeolith-Partikel"), d.h. individualisierten, einzelnen Nanokristallen, mit etwa der gleichen Größe und Form vorliegen. Dabei wird unter den Begriffen "Nanopartikel" oder "Nanokristalle" im Sinne der Erfindung das Vorliegen von Partikeln individueller Nanokristalle oder nicht-agglomerierter Nanokristalle verstanden.

In den erfindungsgemäßen Dispersionen liegen somit die Nanozeolith-Partikel in wässrigen Medien bevorzugt und im Wesentlichen nicht-agglomeriert vor. Dies schließt jedoch nicht aus, dass ein gewisser Anteil der Nanozeolith-Partikel auch agglomeriert, wobei der Anteil agglomerierter Nanozeolith-Partikel vorzugsweise geringgehalten werden sollte, um unerwünschte Streuungseffekte zu vermeiden.

Liegen in einer solchen Dispersion zu große Partikel oder Agglomerate vor, erhöht sich die Streuung und die Detektion der Analyten wird beeinträchtigt, weshalb eine geringe Polydispersität und geringe Agglomeration in der Dispersion wichtig ist.

Bei den hierin beschriebenen Dispersionen handelt es sich um kolloidale Dispersionen der erfindungsgemäßen monodispersen Nanozeolith-Partikel mit der spezifischen Partikelgrößenverteilung in einem wässrigen Medium. Das Dispersionsmedium ist vorzugsweise Wasser oder eine wässrige Lösung. Bevorzugt sind saline oder physiologische Medien. Der Begriff "saline Medien" im Sinne der vorliegenden Erfindung bezeichnet wässrige Medien mit hoher Salzkonzentration, wie sie beispielsweise in körpereigenen Flüssigkeiten oder Sekreten vorherrschen. Der Begriff "körpereigene Flüssigkeiten" oder "körpereigene Sekrete" umfasst sowohl solche von Menschen als auch von Tieren, wobei menschliche körpereigene Flüssigkeiten oder Sekrete bevorzugt sind. Saline Medien bzw. Medien mit hoher Salzkonzentration im Sinne der vorliegenden Erfindung bezeichnet bevorzugt solche Medien, die eine Konzentration von Natrium-Ionen ([Na+]) im Bereich von 20 bis 500 mM, bevorzugt im Bereich von 40 bis 300 mM, besonders im Bereich von 50 bis 200 mM aufweisen.

Saline oder physiologische Medien umfassen beispielsweise Puffer, wie PBS, oder physiologische Kochsalzlösung aber auch biologische Medien wie künstlichen Liquor oder körpereigene Flüssigkeiten und Sekrete wie Urin, Verdauungs-Sekrete, wie Speichel, Magensaft, Pankreas-Sekret, oder Gallenflüssigkeit, Blut, Lymphflüssigkeit, Liquor, Sperma, Fruchtwasser, Tränenflüssigkeit oder Schweiß. Bevorzugt wird das wässrige Medium ausgewählt aus der Gruppe umfassend Wasser, physiologische Kochsalzlösung, PBS, künstlichem Liquor, Urin, Speichel, Blut (umfassend Blutserum/Human Serum (HS) und Humanserumalbumin/Human Serum Albumin (HSA)), Liquor, Fruchtwasser, Sperma und Schweiß. Bevorzugt wird das wässrige Medium ausgewählt aus der Gruppe umfassend Wasser, PBS, Urin, Speichel, Blut und Liquor. Ganz besonders bevorzugt ist das wässrige Medium ausgewählt aus der Gruppe umfassend Wasser, PBS, Urin und Blut.

Die [Na+]-Konzentration solcher Medien liegen im oben definierten Bereich, wie z.B. in dem hier verwendeten künstlichen Liquor mit 78 mM, in Blut zwischen 135 und 145 mM, und in Urin zwischen 50 und 200 mM. In solchen physiologischen oder körpereigenen Medien sind natürlich noch andere Ionen bzw. Salze vorhanden, ausschlaggebend ist jedoch die [Na+]-Konzentration zur Einstufung als "salines Medium".

In einem weiteren Aspekt der Erfindung ist es außerdem möglich, die Dispersion der monodispersen Nanozeolith-Partikel mittels Sprühverfahren oder Aerosoldruckverfahren in eine Schicht, im Sinne eines Films oder Coatings, zu überführen. Durch Herstellung einer sogenannten "Tinte" können die kolloidalen Dispersionen mittels Sprühdruckverfahren auf verschiedene Oberflächen eines Trägers, z.B. aus Glas, Papier oder Kunststoff, wie Glasobjektträger, Quarz- oder PS-Oberflächen, in mehreren ultradünnen Schichten aufgetragen und durch die Verdampfung der Flüssigbestandteile des Aerosols an der Oberfläche des Trägers verankert werden. Auch für diesen Erfindungsaspekt ist die erfindungsgemäße Partikelgrößenverteilung entscheidend, um z.B. das Verstopfen der Düse mit den Nanozeolith-Partikeln zu verhindern und gute Aerosole zu bilden. Derartige Schichten, Filme oder Coatings aus den kolloidalen Dispersionen eignen sich ebenfalls für Bestimmungsmethoden sowohl mittels Fluoreszenz- als auch UV-Vis-Spektroskopie.

Die erfindungsgemäßen Verfahren unter Verwendung der hierin beschriebenen Nanozeolithe eignen sich besonders zur Detektion und qualitativen und quantitativen Bestimmung von neutralen, zwitterionischen und positiv geladenen Analyten, die ausgewählt sind aus der Gruppe von Bioanalyten, also insbesondere von biogenen und bioaktiven Molekülen.

Der Begriff "Bioanalyten" bezeichnet dabei Analyten bzw. zu analysierende Substanzen, die biologisch oder physiologisch relevant sind (biorelevante Analyte) und z.B. im menschlichen oder tierischen Körper vorkommen und dort physiologisch aktiv sind, wie z.B. Botenstoffe (Neurotransmitter), Metaboliten, Hormone etc.. Die zu bestimmenden Bioanalyten sind biogene und bioaktive Moleküle und bevorzugt ausgewählt aus den Gruppen der Hormone, Fette, Metabolite, Neurotransmitter und bioaktiven Wirkstoffe. Die Gruppe von Bioanalyten umfasst beispielsweise die folgenden Substanzen: Serotonin, Dopamin, Tryptamin, Tyramin, Epinephrin, Norepinephrin, Phenylephrin, Octopamin, Phenethylamin, Histamin, Nicotin, Propanolol, L-DOPA, Phenylalanin, Tyrosin, Histidin, Tryptophan (Trp), Tryptophanamide, 5-HTP, TrpGly, Indol, Indol-3-Essigsäure, Melatonin, Ascorbinsäure, Adenosin, Estradiol, Propanil, Catechol, Acetylcholin, Glycin (Gly), D-Serin, Aspartat, Glutamat, GABA, Cadaverin, Ethanolamin und Glucose. Bevorzugte Bioanalyten sind ausgewählt aus der Gruppe umfassend Serotonin und Dopamin.

Die Erfindung ist jedoch nicht auf solche Bioanalyten beschränkt, sondern ist auch auf weitere neutrale, zwitterionische oder positive geladene Analyte anwendbar, wie z.B. Paracetamol.

Aus der Gruppe der vorgenannten Bioanalyten gehören die folgenden Substanzen zur Gruppe der erfindungsgemäß als "positiv geladene Analyten" bezeichneten Gruppe: Serotonin, Dopamin, Tryptamin, Tyramin, Epinephrin, Norepinephrin, Phenylephrin, Octopamin, Phenethylamin, Histamin, Nicotin, Propanolol, Histidin, Tryptophanamide, Acetylcholin, Cadaverin, Ethanolamin.

Aus der Gruppe der vorgenannten Bioanalyten gehören die folgenden Substanzen zur Gruppe der erfindungsgemäß als "neutrale Analyten" bezeichneten Gruppe: Indol, Glucose, Catechol, Ascorbinsäure, Propanil, Estradiol, Melatonin, Indol-3-Essigsäure, TrpGly, Tryptophan (Trp), 5-HTP, L-DOPA, Paracetamol, Phenylalanin, D-Serin, Aspartat, Glutamat, GABA, Glycin (Gly), Tyrosine, Adenosin. Mit dem Verfahren der vorliegenden Erfindung ist beispielsweise auch Tryptophan detektierbar, welches nach außen hin neutral ist aber eine Ladung innerhalb des Moleküls aufweist und somit auch als zwitterionisch bezeichnet werden kann.

Ein weiterer Aspekt der Erfindung betrifft neue Chemosensoren auf Basis der erfindungsgemäßen monodispersen Nanozeolithe. Darin bezeichnet der Begriff "Chemosensor(en)" im Sinne der Erfindung die erfindungsgemäßen Zeolithe, die mit einem oder mehreren Farbstoffen oder Indikatoren kombiniert vorliegen. Chemosensoren im Sinne derartiger Zeolith-Farbstoff/-Indikator-Kombinationen sind beispielsweise bekannt aus den oben genannten Patentschriften EP3225590A1 und WO2019238805A1. Zur Herstellung der darin beschriebenen Chemosensoren werden die Farbstoff- oder Indikatormoleküle einzeln in die Kavität der Zeolithe eingeführt und darin eingelagert oder liegen mit diesen konjugiert vor.

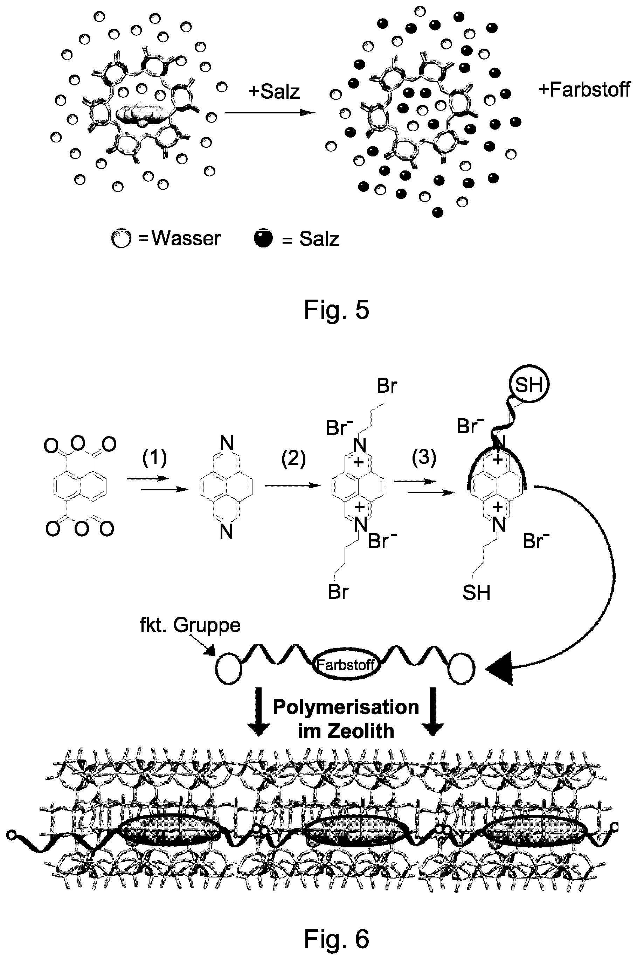

Damit kann es jedoch beim Einsatz dieser bisher in der Analytik verwendeten bekannten Alumino-Silikat-basierten Chemosensoren zu dem unerwünschten Effekt kommen, dass der Farbstoff oder Indikator durch hohe Salzkonzentrationen des Analysemediums im Zuge einer Kationen-Austauschreaktion aus dem Zeolithen gedrängt wird und die signalgebenden Bindungstaschen dann nicht mehr zur Detektion von relevanten Analyten zur Verfügung stehen. Je höher die Salzkonzentration, umso stärker findet die Kationen-Austauschreaktion statt, zu Gunsten der gelösten Metallkationen und zu Ungunsten der eingelagerten oder konjugierten Farbstoffe oder Indikatoren. Das Gleichgewicht des Chemosensors verlagert sich auf die Seite der Dissoziation und die Farbstoffbindungstaschen (Kavitäten), welche ein analytisches Signal geben können, gehen verloren (Figur 5).

Bei Verwendung derartiger bekannter Chemosensoren ist die Einsetzbarkeit in salinen Medien mit hoher Salzkonzentration somit limitiert. Natrium-haltige Puffer, zum Beispiel solche mit Natriumsalzen wie Natriumphosphat oder Natriumchlorid, führen zu Kationen-Austauschreaktionen und einer Zersetzung der bekannten Alumino-Silikat-basierten Chemosensoren, wodurch diese dysfunktional werden. Bei Verwendung bekannter Chemosensoren wird deshalb auf HEPES-Puffer ausgewichen. Da physiologische oder biologische Medien und die meisten körpereigenen Flüssigkeiten wie etwa PBS, Urin, Speichel, Schweiß oder Blut etc., ebenfalls Natrium-Salze in hohen Konzentrationen enthalten, sind die bekannten Alumino-Silikat-basierten Chemosensoren für analytische Bestimmungen in solchen Medien gleichermaßen limitiert.

Ein weiterer Aspekt der Erfindung betrifft somit geeignete Modifizierungen der erfindungsgemäß eingesetzten Nanozeolithe, damit deren Stabilität und damit breite Einsetzbarkeit in analytischen Bestimmungsmethoden mit salinen Medien oder Dispersionen mit hoher Salzkonzentration verbessert wird. Es hat sich überraschend gezeigt, dass die erfindungsgemäßen Nanozeolithe gegen Kationen-Austauschreaktionen und Zersetzung in salinen Medien stabilisiert werden können, indem diese mit funktionalisierten Farbstoff- oder Indikatormolekülen dotiert werden. Dabei sind die Farbstoffmoleküle innerhalb der Kavitäten lokalisiert. Durch die Verwendung funktionalisierter Farbstoff- oder Indikatormoleküle werden die Farbstoffe oder Indikatoren nicht lediglich in die Zeolithkanäle eingelagert oder z.B. durch kovalente oder ionische Bindungen damit konjugiert, sondern darin quasi mechanisch bzw. sterisch verankert. Dabei wird die Verankerung der Farbstoff- oder Indikatormoleküle durch kovalente bzw. chemische Bindung oder Polymerisation der Farbstoff-/Indikator-Monomere untereinander innerhalb der Zeolithkavitäten mittels Ship-in-the-Bottle Ansätzen erreicht, was zu salzstabilen Chemosensoren führt (Figur 6). Durch die resultierende Vergrößerung der eingelagerten Farbstoff-/Indikatormoleküle (z.B. gebildete Polymere) ergibt sich eine mechanische oder sterische Verankerung der Farbstoff-/Indikatormoleküle mit dem Nanozeolith durch die diese aus sterischen Gründen nicht mehr oder schwerer in der Kationen-Austauschreaktion aus der Kavität ausgewaschen werden können. Dies resultiert in einer Persistenz der signal-gebenden Kavitäten auch unter Einwirkung hoher Salzkonzentrationen und ermöglicht somit eine erweiterte und stabile Anwendbarkeit in biologischen Medien und direkt in körpereigenen Flüssigkeiten oder Sekreten, wie z.B. in Urin, Speichel, Schweiß, Sperma, Blut etc..

Derart modifizierte neue Chemosensoren können erhalten werden, indem die Farbstoff-/Indikatormoleküle (einzelne Moleküle/Monomere) den erfindungsgemäßen Nanozeolith-Partikeln zugesetzt werden. Dies kann im Fall der Herstellung der Nanozeolith-Partikel durch Sonikation mit hoher Schallintensität (Arbeitsfrequenz ≥30 kHz, Energiedichte ≥300 W cm²), wie vorstehend beschrieben, sowohl vor als auch nach der Sonikation mit hoher Schallintensität (Arbeitsfrequenz ≥30 kHz, Energiedichte ≥300 W cm²) erfolgen. Durch geeignete Einstellung von Mischmedium und Konzentrationen der Komponenten, ist eine Zerkleinerung der zunächst aus herkömmlichen Zeolithen hergestellten neuen Chemosensoren auf die erfindungsgemäße Partikelgrößenverteilung möglich, ohne dabei die Chemosensoren wieder aufzutrennen, d.h. eine potentielle Separation von Zeolith und Farbstoff/Indikator findet nicht statt. Dadurch werden neue Chemosensoren bereitgestellt, worin die erfindungsgemäßen Nanozeolithe mit der erfindungsgemäßen Partikelgrößenverteilung mit einem oder mehreren funktionalisierten Farbstoffen oder funktionalisierten Indikatoren dotiert sind. Erfindungsgemäß werden funktionalisierte Farbstoffe/Indikatoren verwendet, deren funktionalisierte Endgruppen eine Derivatisierung/Polymerisierung innerhalb der Zeolithkavitäten (bottle) erlaubt. Das in den Kavitäten entstehende (z.B. dimerisierte oder polymerisierte) große Farbstoffderivat (Ship) kann aufgrund massiver sterischer Hinderung der Zeolithwände nicht mehr aus den Kavitäten verdrängt werden. Durch die nahezu zweidimensionale Geometrie der Farbstoffe/Indikatoren bleibt aber genug Raum innerhalb der Kavitäten, dass die zu untersuchenden Analyt-Moleküle eindringen und einen Signalunterschied bewirken können.

Geeignete funktionalisierte Farbstoffe oder Indikatoren können ausgewählt werden aus der Gruppe solcher, die funktionalisierte Gruppen aufweisen, die die folgenden Reaktionen untereinander ermöglichen:
- Disulfidbrücken-Bildung
- Maleimide-Thiol-Reaktion
- Epoxid-Thiol-Reaktion / Epoxid-Amin-Reaktion
- Haloacetamid- oder Alkylhalogenid Thiol-Reaktion
- Vinylsulfon-, Acrylat-/Acrylamid-Thiol-Reaktion
- Amin-Isothiocyanat-Reaktion
- Aldehyd-Amin-Reaktion zu Hydrazon oder Imin
- NHS-Ester mit Amin.

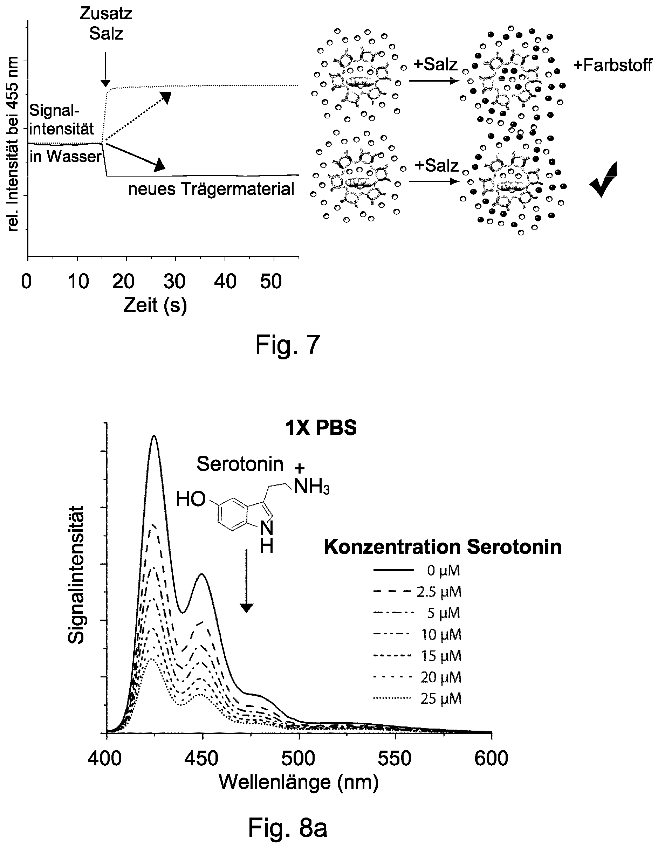

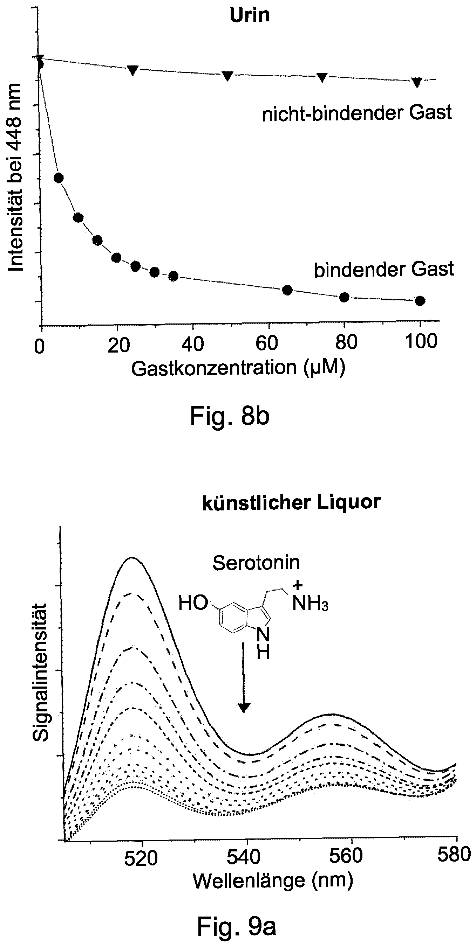

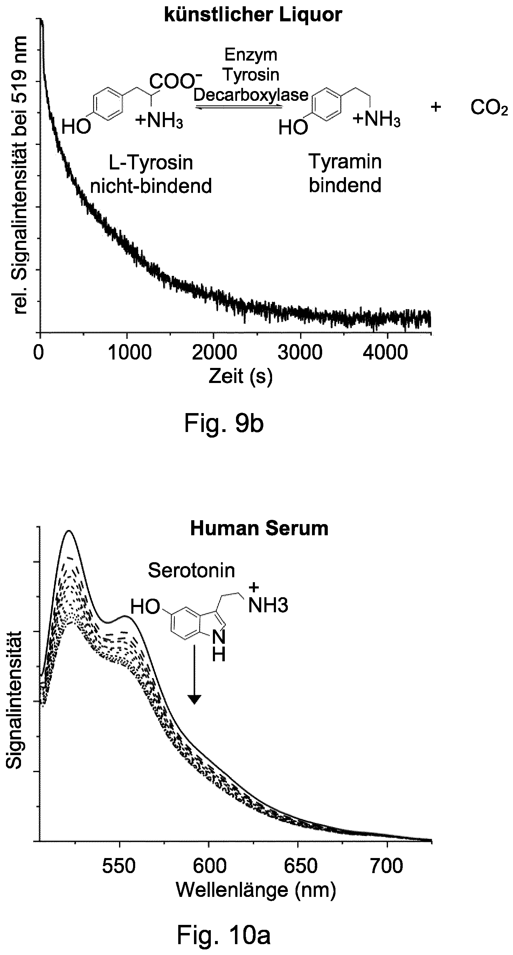

Gegebenenfalls werden die mechanisch/sterisch verankerten Farbstoffe/Indikatoren innerhalb der Kavitäten leicht gequencht, bleiben aber funktional. Gleiches gilt für die mechanisch/sterisch verankerten Farbstoffe/Indikatoren bei Präsenz von Ionen wie zum Beispiel Chloridionen (Figur 7). Diese neuen Chemosensoren eignen sich besonders zur Verwendung in analytischen Bestimmungsmethoden, die mit salinen Medien wie PBS und künstlichem Liquor oder direkt in biologischen Medien und körpereigenen Flüssigkeiten wie z.B. Urinproben oder in Blutserum voll funktionsfähig angewendet werden (Figur 8, 9 und 10).

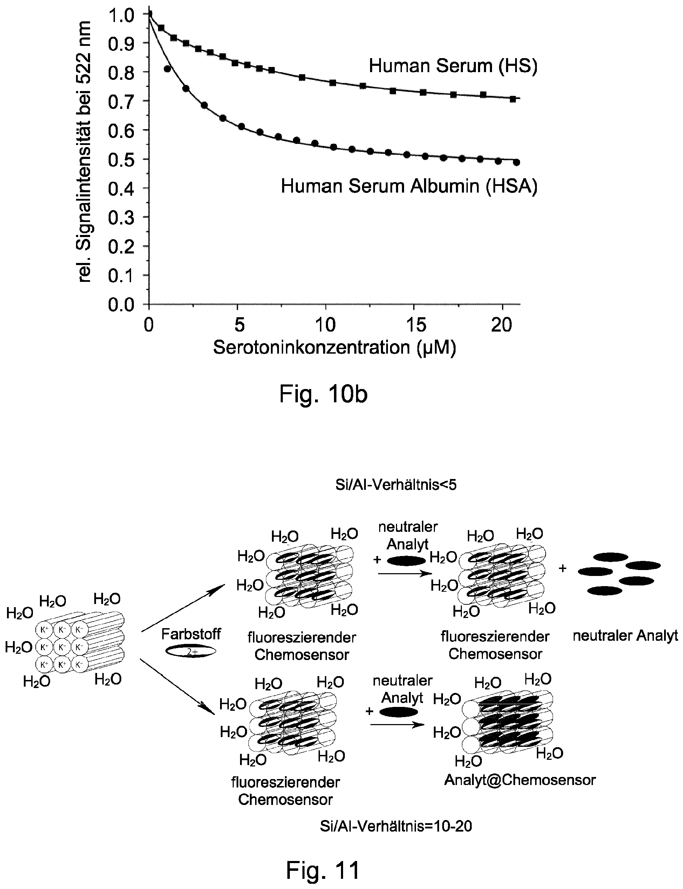

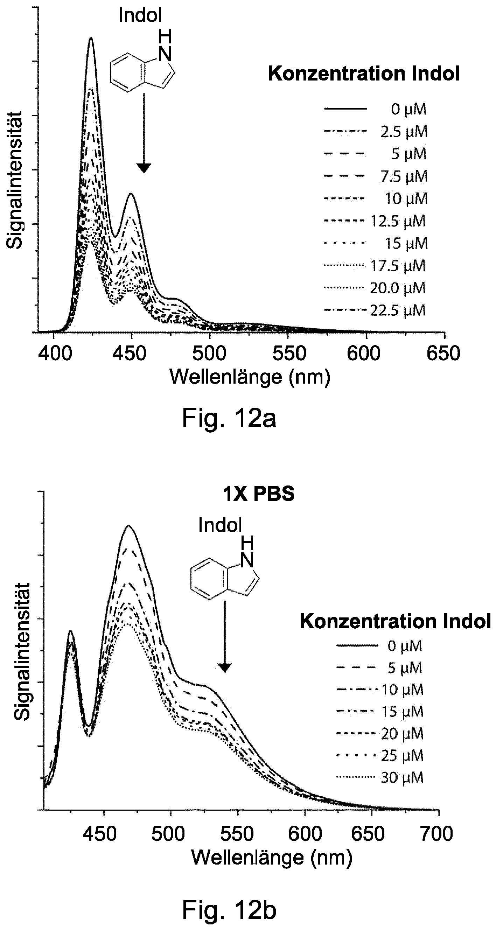

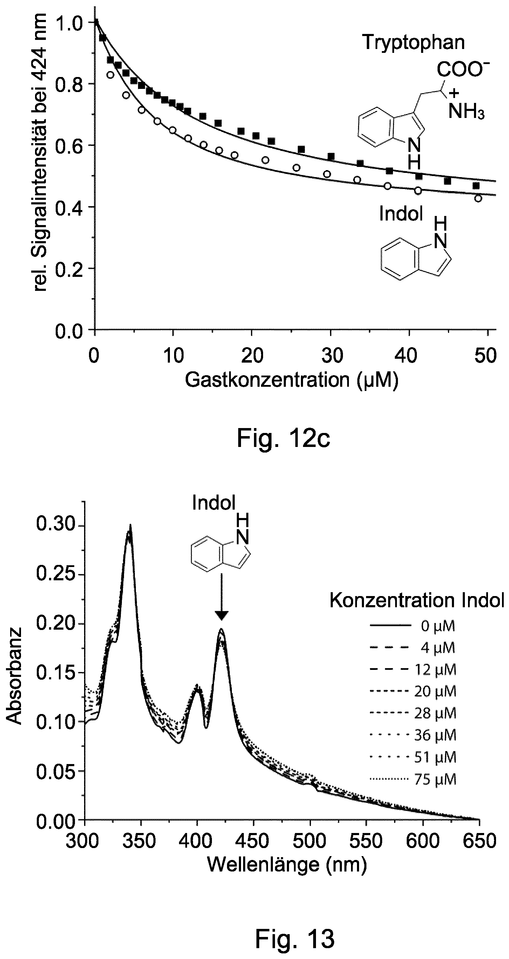

Mit den bekannten Alumino-Silikat-basierten Chemosensoren ist auch der Einsatz in der Bestimmung neutraler Analyte limitiert, da diese aufgrund der fehlenden Ladung nicht gebunden und damit auch nicht nachgewiesen werden können. Bei Verwendung von erfindungsgemäßen Chemosensoren die zusätzlich durch die oben definierten bevorzugten Si/Al Verhältnisse für die Bestimmung neutraler Analyte charakterisiert sind, wird eine verbesserte Balance zwischen Hydrophobie und Hydrophilie ermöglicht. Somit können sowohl positiv geladene Farbstoff-/Indikatormoleküle im Zeolith gebunden werden, um die Signal-gebenden Bindungstaschen zu formen, aber auch die zu bestimmenden neutralen Analyt-Moleküle (Figur 11). Wie in den nachfolgenden Beispielen und Figuren gezeigt, wird bei Verwendung der neuen Chemosensoren mit dem als bevorzugt definierten Si/Al Verhältnis von ≥ 10 für neutrale Analyten, vorzugsweise mit einem Si/Al Verhältnis im Bereich von 10 bis 20, eine Bindung und damit auch eine Detektion mittels UV-Vis-Spektroskopie möglich (Figur 12 und 13). Chemosensoren mit deutlich geringerem Si/Al Verhältnis zeigen bei der Zugabe eines neutralen Analyten, wie z.B. Indol, keine nennenswerte Signaländerung (Figur 11 oben) und zwitterionische Moleküle, wie z.B. Tryptophan, können nur bei pH < 3 durch die damit verbundene Protonierung des Analyten (Gastes) detektiert werden.

Die Erfindung umfasst in einem weiteren Aspekt somit auch die neuen Chemosensoren aus monodispersen Nanozeolithen mit einer Partikelgrößenverteilung im Bereich von 5 bis 400 nm, die durch die hierin definierten Merkmale der erfindungsgemäßen Nanozeolithe noch weiter charakterisiert sein können, mit einer Dotierung mit einem oder mehreren funktionalisierten Farbstoffen oder Indikatoren, wie vorstehend im Detail beschrieben.

Die Erfindung umfasst in einem weiteren Aspekt außerdem die vorstehend beschriebenen neuen Chemosensoren in Form einer kolloidalen Dispersion in einem wässrigen, physiologischen oder biologischen Medium, vorzugsweise einem solchen wie vorstehend definiert, oder in Form einer Schicht, eines Films oder Coating, welches mittels Sprühverfahren oder Aerosoldruck erhältlich ist, wie vorstehend beschrieben.

Die hierin beschriebenen monodispersen Nanozeolithe mit der erfindungsgemäßen Partikelgrößenverteilung sowie die erfindungsgemäßen neuen Chemosensoren sind aufgrund der vorstehenden Ausführungen besonders geeignet für die hierin beschriebenen Analyseverfahren zur Bestimmung neutraler, zwitterionischer oder positiv geladener Bioanalyte.

Die neuen Analyseverfahren der vorliegenden Erfindung ermöglichen außerdem die Detektion und qualitative und quantitative Bestimmung von Analytmischungen sowie die Unterscheidung verschiedener Analytenverhältnisse.

Folglich umfasst die Erfindung in einem weiteren Aspekt auch neue Verfahren zur Bestimmung neutraler, zwitterionischer und/oder positiv geladener Bioanalyten durch UV-Vis- oder Fluoreszenzspektroskopie, wie hierin definiert, unter Verwendung monodisperser Nanozeolithe mit einer Partikelgrößenverteilung im Bereich von 5 bis 400 nm, wie hierin definiert, worin die neuen Verfahren die folgenden Schritte umfassen:
i) Bereitstellung oder Herstellung einer Dispersion der monodispersen Nanozeolithe mit einer Partikelgrößenverteilung im Bereich von 5 bis 400 nm, wie hierin definiert, in einem wässrigen Medium, wie hierin definiert, wobei die Dispersion die zu bestimmenden Bioanalyten bereits enthalten kann (wie im Fall der Bestimmung direkt in körpereigenen Flüssigkeiten);
ii) (andernfalls) ggf. Zugabe der Dispersion gemäß i) zu dem die zu bestimmenden Bioanalyten enthaltenden Medium, z.B. körpereigenen Flüssigkeiten wie Urin, Speichel, Blut, Liquor etc., wie vorstehend definiert;
iii) ggf. Herstellung einer Schicht, eines Films oder eines Coatings aus der Dispersion gemäß i) oder ii) auf einem geeigneten Träger mittels Sprühverfahren oder Aerosoldruckverfahren, wie vorstehend beschrieben;
iv) Bestimmung der Bioanalyten in der Dispersion gemäß i), ii) oder in der Schicht, dem Film oder Coating auf dem Träger gemäß iii) mittels UV-Vis- oder Fluoreszenzspektroskopie, bevorzugt mittels UV-Vis-Spektroskopie.

Vor dem Schritt i) können die monodispersen Nanozeolithe zunächst aus bekannten ZeolithMaterialien hergestellt werden, indem diese mittels Sonikation mit hoher Schallintensität (Arbeitsfrequenz ≥30 kHz, Energiedichte ≥300 W cm²) zerkleinert werden, bis sie eine monodisperse Partikelgrößenverteilung im Bereich von 5 bis 400 nm aufweisen. Die Dispersion der Nanozeolithe aus Schritt i) kann zusätzlich einer sterilen Hochdruckfiltration unterworfen werden.

Außerdem kann ein Schritt der Dotierung der Nanozeolithe mit funktionalisierten Farbstoffen oder Indikatoren erfolgen, um die hierin beschriebenen neuen Chemosensoren zu erhalten. Dabei kann, im Fall der Herstellung der Nanozeolithe mittels Sonikation mit hoher Schallintensität (Arbeitsfrequenz ≥30 kHz, Energiedichte ≥300 W cm²), die Farbstoff- oder Indikator-Dotierung vor oder nach der Sonikation mit hoher Schallintensität erfolgen.

### Beschreibung der Figuren

- Fig. 1: (a) **Sedimentationsprozess** eines handelsüblichen Zeoliths (Zeolith Y₁₅ - Si/Al Verhältnis = 15) mittels Farbstoffdetektion und Flüssigphasen-Spektroskopie unter Bestimmung der Intensitätsabnahme des Farbstoffes im zeitlichen Verlauf durch Sedimentation des Zeoliths, in welchem die Farbstoffmoleküle eingelagert sind
(b) Enzymkinetik unter Verwendung eines sedimentierenden Chemosensors: Signal des Chemosensor ohne Enzymzugabe unter Präsenz eines nicht-bindenden Gastes (obere Kurve), Signal des Chemosensor mit Enzymzugabe und dadurch Umsatz des nicht-bindenden zu einem bindenden Gast (untere Kurve)
- Fig. 2: (a) Vergleich der Partikelgrößenverteilung eines erfindungsgemäßen Nanozeoliths mit der eines handelsüblichen Zeolithen (Zeolith Y₁₅)
(b) Enzymkinetik unter Verwendung eines erfindungsgemäßen Chemosensors: Signal des Chemosensor ohne Enzym unter Präsenz eines nicht-bindenden Gastes (obere Kurve), Signal des Chemosensors mit Enzym und dadurch Umsatz des nicht-bindenden zu einem bindenden Gast (untere Kurve)
- Fig. 3: (a) **Vergleich** der Partikelgröße eines handelsüblichen Zeolithen L_{3.0} mit der Partikelgröße eines aus diesem handelsüblichen Zeolithen mittels Sonikation mit hoher Schallintensität (Arbeitsfrequenz ≥30 kHz, Energiedichte ≥300 W cm²) und Hochdruckfiltration hergestellten Nanozeoliths
(b) Zoom-In
- Fig. 4: Absorptionsspektren von erfindungsgemäßen Chemosensoren, welche unter Zugabe von positiv geladenen Analyten (Gästen) eine Signaländerung in den UV-Vis Spektren zeigen
(a) Analyt: Serotonin
(b) Analyt: Dopamin
(c) Detektion und Unterscheidung verschiedener Dopamin-Serotonin-Mischungen durch UV-Vis-Spektroskopie
- Fig. 5: Schematische Darstellung der Kationen-Austauschreaktion, welche zur Zersetzung herkömmlicher Chemosensoren in biologischen (relevanten) Medien wie PBS oder Urin führt. Der Farbstoff wird durch die hohe Salzkonzentration aus dem Trägermaterial gedrängt und die signalgebenden Bindungstaschen stehen nicht mehr zur Detektion der Analyten zur Verfügung
- Fig. 6: Schematische Darstellung eines erfindungsgemäßen Chemosensors auf Basis eines mit funktionellen Farbstoffen dotierten erfindungsgemäßen Nanozeolithen, worin die Farbstoffmoleküle mit funktionellen Gruppen funktionalisiert, nach der Beladung des Zeolithen durch Bindung oder Polymerisation untereinander verknüpft oder polymerisiert und so in den Zeolithkavitäten sterisch oder mechanisch verankert werden
- Fig. 7: Untersuchung des Einflusses hoher Salzkonzentrationen im Testmedium auf die Signalstärke bei Verwendung herkömmlicher Chemosensoren im Vergleich zu den erfindungsgemäßen neuen Chemosensoren. Die Signalerhöhung nach der Salzzugabe signalisiert den Austritt der Farbstoffmoleküle und damit die Aufhebung der leichten Quenchung durch die Zeolithkavitäten. Der Chemosensor ist nicht mehr funktional (oben). Die Signalerniedrigung des neuen Trägermaterials nach der Salzzugabe bestätigt die Interaktion der derivatisierten Farbstoffe mit den zugefügten Ionen. Die Bindungstaschen bleiben aber dennoch bestehen (unten)
- Fig. 8: Detektion verschiedener Analyte (Gäste) in physiologischen bzw. biologischen Medien
(a) Detektion von Serotonin in 1X PBS, entsprechend einer physiologischen Salzkonzentration an Natriumchlorid von 137 mM
(b) Unterscheidung verschiedener Analyte (Gäste) in menschlichem Urin von freiwilligen Probanden
- Fig. 9: Detektion verschiedener Analyte (Gäste) in physiologischen bzw. biologischen Medien
(a) Detektion von Serotonin in künstlichem Liquor
(b) Aufzeichnung der enzymatischen Umsetzung von nicht-bindendem L-Tyrosin zu bindendem Tyramin unter Verwendung des erfindungsgemäßen neuen Chemosensors in künstlichem Liquor
- Fig. 10: (a) Detektion von Serotonin in Blutserum (Human Serum, HS, 1:2 verdünnt mit 50 mM HEPES)
(b) Detektion von Serotonin in Blutserum (Human Serum, HS, 1:2 verdünnt mit 50 mM HEPES, oben) beziehungsweise in Gegenwart des Proteins Humanalbumin (Human Serum Albumin, HSA, unten)
- Fig. 11: Schematische Darstellung der Nicht-Bindung von neutralen Analyten (Gästen) an herkömmlichen Zeolith-basierten Chemosensoren und der Bindung an den neuen erfindungsgemäßen Chemosensoren mit ausgewogener Balance zwischen Hydrophobie und Hydrophilie
- Fig. 12: (a) Detektion des neutralen Analyten Indol mittels erfindungsgemäßem neuen Chemosensor unter Bindung der Indolmoleküle in den durch die Farbstoffmoleküle gebildeten Bindungstaschen unter Signalerniedrigung aufgrund von Interaktion;
(b) Detektion des neutralen Analyten Indol mittels erfindungsgemäßem neuen Chemosensor unter Bindung der Indolmoleküle in 1X PBS, entsprechend einer physiologischen Salzkonzentration an Natriumchlorid von 137 mM
(c) Detektion des zwitterionischen Analyten Tryptophan (oben) und des neutralen Analyten Indol (unten) mittels erfindungsgemäßem neuen Chemosensor unter Signalerniedrigung durch Interaktion mit dem Farbstoff. Auftragung bezogen auf eine ausgewählte Wellenlänge zur Bestimmung der Bindungsaffinität
- Fig. 13: Detektion des neutralen Analyten Indol mittels erfindungsgemäßem neuen Chemosensor und UV-Vis-Spektroskopie

Die vorliegende Erfindung wird durch die nachfolgenden Beispiele näher beschrieben, ohne jedoch hierauf beschränkt zu sein.

### Beispiele

### Beispiel 1 - Sedimentationsuntersuchungen an handelsüblichen Zeolithen

### a) Farbstoffdetektion

In einen handelsüblichen Zeolithen (Zeolith Y₁₅ - Si/Al Verhältnis = 15; Partikelgrößenverteilung 400 - 1700 nm nach DLS (Beschreibung der Methode unter Beispiel 2) wurden nach herkömmlichen Verfahren zweifach positiv geladene, diazapyrenbasierte Farbstoffmoleküle in die Kavitäten eingelagert und die Intensitätsabnahme des Farbstoffs aufgrund von Sedimentation des Zeoliths durch Bestimmung der Farbstoffintensität nach 0 h, 5 h und 8 h mittels Flüssigphasen-Spektroskopie detektiert.

Die Messung wurde unter den folgenden Bedingungen durchgeführt: Die Beladung der verwendeten Zeolithmaterialien mit Farbstoff wurde immer in einem Bereich von 0.23 - 2.3 wt% Farbstoff bezogen auf das Zeolithmaterial gewählt. In dem vorliegenden Beispiel beträgt die Farbstoffbeladung 0.23 wt% relativ zum Zeolithmaterial und die Konzentration des Chemosensors in der Dispersion liegt bei 250 µg/ml. Zur Herstellung wurden Zeolith und Farbstoff vermischt, zentrifugiert (8000 rpm, 5 min) und das Material dreimal mit 10 mL MilliQ Wasser gewaschen. Durch Vermessung und Farbstoffkonzentrationsbestimmung der Waschlösungen und unter bekannter Ausgangskonzentration konnte die Farbstoffbeladung genau bestimmt werden. Die Messungen wurden an einem Jasco FP-8300 Fluoreszenzspektrometer mit einer 450 W Xenonlampe mit Platereader-Aufsatz durchgeführt. Die Lagerung der mit Dispersion gefüllten Plates zwischen den Messungen erfolgte unter Ausschluss von Licht bei Raumtemperatur. Die Excitation erfolgte bei 371 nm, die Detektion bei 424 nm.

Figur 1a zeigt deutlich, dass die Intensität des Farbstoffes mit der Zeit durch die Sedimentation des Zeoliths, in welchem die Farbstoffmoleküle eingelagert sind, abnimmt.

### b) Enzymkinetik

Durch Zugabe eines Enzyms (Tyrosin Decarboxylase, TDC) zu einer Dispersion eines handelsüblichen Zeolith, welches mit unverzweigten, positiv geladenen Farbstoffmolekülen beladen wurde (wie in Beispiel 1a beschrieben), und einer Lösung von nicht-bindendem L-**Tyrosin,** wurde die Bildung eines Analyten stimuliert, der das Sensorsignal quencht. Die Signalintensität über die Zeit wurde gemessen.

Die Messung wurde unter den folgenden Bedingungen durchgeführt: Der Chemosensor wurde mit dem unter 1a beschrieben Verfahren hergestellt (Farbstoffbeladung 2.3wt%) und anschließend mit 10 mM HEPES Puffer (pH 6.2) auf eine Chemosensorkonzentration von 550 µg/ml verdünnt. Als Zeolith wurde L_{3.0} verwendet, als Farbstoffe wiederrum die zweifach positiv geladenen, diazapyrenbasierten Moleküle. Zudem wurden dieser Dispersion ein Enzym-Cofaktor (Pyridoxal-5-Phosphat, PRP) und 500 µM L-Tyrosin als nicht-bindender Analyt zugesetzt. Nach Inkubation bei 37 °C über 30 Minuten wurde die Dispersion erneut dispergiert und im Anschluss an einem Jasco FP-8300 in Einmalküvetten vermessen (oben) beziehungsweise nach der Zugabe des Enzyms Tyrosin Decarboxylase (TDC, 33 µg) in Einmalküvetten vermessen (unten). TDC katalysiert die Umsetzung des nicht-bindenden L-Tyrosins zu dem bindenden Tyramin. Die Excitation erfolgte bei 300 nm, die Emission bei 500 nm.

Figur 1b zeigt, dass bereits über eine Dauer von 10 Minuten eine deutliche Intensitätsabnahme durch Sedimentation erfolgt. Langsamere enzymatische Reaktionen würden daher von der Baselinedrift überdeckt und dadurch nicht analysierbar. Auch die Signalkurve mit Enzym zeigt unerwünschtes Rauschen, wodurch keine Michaelis-Menten Kinetiken fitbar sind. Außerdem war die Messung auf HEPES Puffer als Analysemedium beschränkt, da die biologisch relevanten Natriumphosphatpuffer zur Desintegration des Chemosensors (in diesem Fall herkömmliches Zeolith L_{3.0} ohne vorherige Behandlung durch einen Stabsonikator/Filtration) führten.

### Beispiel 2 - Partikelgrößenverteilung und Sedimentationsuntersuchungen an erfindungsgemäßen Zeolithen

### a) Partikelgrößenverteilung

Ein Vergleich der Partikelgrößenverteilung eines erfindungsgemäßen Nanozeoliths (hier gezeigtes Nanozeolith mit einem Si/Al Verhältnis von 1.76) mit der eines handelsüblichen Zeolithen (Zeolith Y₁₅; Si/Al = 15) zeigt Figur 2a.

Die Bestimmung der Partikelgrößenverteilung erfolgte mittels Dynamischer Lichtstreuung (dynamic light scattering, DLS) an einem Malvern ZetaSizer Nano ZS der Firma Malvern Panalytics in Acryl-Einmalküvetten in Wasser. Hierzu wurden die Dispersionen analog zu dem unter 1a beschriebenen Verfahren hergestellt.

### b) Enzymkinetik

Wie in Beispiel 1b wurde durch Zugabe eines Enzyms (Tyrosin Decarboxylase, TDC) zu einem erfindungsgemäßen Chemosensor auf Basis des in Beispiel 3b eingesetzten erfindungsgemäßen Nanozeolithen die Bildung eines Analyten simuliert, der das Sensorsignal quencht, und mittels Enzymkinetik die Intensität über die Zeit gemessen. Als Trägermaterial wurde Zeolith L_{3.0} verwendet, welches nach dem Dispergieren durch Einsatz eines Stabsonikators mit sehr hoher Schallintensität (Arbeitsfrequenz ≥30 kHz, Energiedichte ≥300 W cm²) und anschließender Hochdruckfiltration homogenisiert wurde. Die Farbstoffbeladung erfolgte wie unter Beispiel 1 beschrieben, wobei diese sowohl vor als auch nach der Homogenisierung durchgeführt werden kann (bei gezeigtem Beispiel erfolgte diese vor der Homogenisierung). Weitere Bedingungen des Enzymmonitoring können Beispiel 1b entnommen werden.

Der Vergleich von Figur 2b mit Figur 1b zeigt, dass mit den erfindungsgemäßen Chemosensoren rauscharme und gut fitbare kinetische Kurven detektiert werden können.

### Beispiel 3 - Herstellung eines erfindungsgemäßen Nanozeoliths und eines erfindungsgemäßen Chemosensors

### a) Herstellung eines erfindungsgemäßen Nanozeoliths mittels Sonikation mit hoher Schallintensität

Aus einem handelsüblichen Zeolith (Zeolith L_{3.0}) mit einer Partikelgrößenverteilung von 80 - 500 mit agglomerierten Partikeln mit Größen bis zu 6500 nm wurde mit dem erfindungsgemäßen Verfahren unter Anwendung von Sonikation mit hoher Intensität (Arbeitsfrequenz ≥30 kHz, Energiedichte ≥300 W cm²) und anschließender steriler Hochdruckfiltration ein erfindungsgemäßes Nanozeolith mit einer Partikelgrößenverteilung von 80 - 300 nm hergestellt.

Die Herstellung wurde unter den folgenden Bedingungen durchgeführt: Das handelsübliche Zeolithmaterial wurde in Wasser dispergiert und mittels Dynamischer Lichtstreuung (dynamic light scattering, DLS) an einem Malvern ZetaSizer Nano ZS der Firma Malvern Panalytics vermessen. Im Anschluss wurde die Dispersion für 15 min mit hoher Intensität mittels Stabsonikator soniciert und mittels Hochdruckfiltration die verbleibenden großen Partikel abgetrennt. Diese Verfahrensschritte können auch nach der Einbringung des Farbstoffs angewendet werden. Hierzu werden die Dispersionen analog zu dem unter 1a beschriebenen Verfahren hergestellt.

Das Vergleichsergebnis zeigen Figur 3a und 3b.

### b) Herstellung eines erfindungsgemäßen Chemosensors

Die Herstellung eines erfindungsgemäßen Chemosensors auf Basis der erfindungsgemäßen Nanozeolithe mit einer Dotierung funktionalisierter Farbstoffe oder Indikatoren wird nachfolgend beschrieben: Bisher benutzte Farbstoffmoleküle verfügten über keinerlei Verlinkungsmöglichkeiten/Polymerisationsmöglichkeiten. Als Beispiel kann hier 2,7-Dimethyldiazapyrenium Dibromid genannt werden. Durch das Anfügen von Linkermolekülen, wie es genauer unter Beispiel 5 und Figur 6 erläutert wird, ist die Möglichkeit zur Verlinkung innerhalb der Kavitäten gegeben. Die ursprünglich Zeolithbeladung ist allerdings für alle Farbstoffmoleküle gleich: der Farbstoff wird mit bekannter Konzentration in wässrige Lösung gebracht, das verwendeten Zeolithmaterial wird in Wasser dispergiert. Die Beladung mit Farbstoff wurde immer in einem Bereich von 0.23 - 2.3 wt% Farbstoff bezogen auf das Zeolithmaterial gewählt und dementsprechend Dispersion und Farbstofflösung vermischt, zentrifugiert (8000 rpm, 5 min) und das Material dreimal mit 10 mL MilliQ Wasser gewaschen und wiederrum zentrifugiert. Durch Vermessung der Waschlösungen und unter bekannter Ausgangskonzentration konnte die Farbstoffbeladung genau bestimmt werden. Die Messungen wurden an einem Jasco FP-8300 Fluoreszenzspektrometer mit einer 450 W Xenonlampe mit Platereader-Aufsatz durchgeführt. Das so entstandene Chemosensormaterial kann sowohl in Lösung als auch als Feststoff gelagert werden. Um die Polymerisation innerhalb der Zeolithkavitäten auszulösen muss (zumindest um eine weite Verzweigung zu erreichen) ein äußerer Einfluss geändert werden. So wird zum Beispiel die Polymerisation über Disulfidbrückenbindung (s. Abbildung 6a) durch die Zufuhr von Sauerstoff getriggert während zum Beispiel die Thiol-Maleimide Reaktion durch die Zufuhr von Temperatur begünstigt wird.

### Beispiel 4 - UV-Vis Bestimmung von Serotonin und Dopamin mit den erfindungsgemäßen neuen Chemosensoren

Mit einem gemäß Beispiel 3 nach dem erfindungsgemäßen Verfahren hergestellten neuen Chemosensor wurden die positiv geladenen Bioanalyten Serotonin und Dopamin mittels UV-Vis-Detektion bestimmt.

Die Messung wurde unter den folgenden Bedingungen durchgeführt: Die Chemosensoren wurden nach dem unter 3b beschriebenen Verfahren hergestellt und 2000 µL der hergestellten Dispersionen in Einmalküvetten vermessen. Im Anschluss wurden unter Rühren 1 mM Stocklösungen der zu bestimmenden Analyten in 1-10 µL Schritten zu titriert und die entsprechenden UV-Vis-Spektren aufgenommen. Alle Experimente wurden beim 25 °C durchgeführt.

Die Figuren 4a, 4b und 4c zeigen, dass durch das erfindungsgemäße Verfahren und die daraus erhältlichen Nanozeolithe die neuen erfindungsgemäßen Chemosensoren mit geringerer Streuwirkung hergestellt werden können, und damit die UV-Vis-Bestimmung von Bioanalyten ermöglicht wird.

### Beispiel 5 - Einfluss der Salzkonzentration auf Zeolith-basierte Chemosensoren

Zur Darstellung des Einflusses hoher Salzkonzentrationen im Testmedium auf die Signalstärke wurden ein herkömmlicher Chemosensor basierend auf Zeolith L_{3.0} mit einem zweifach positiv geladenen, diazapyrenbasierten Farbstoff ohne Verlinkungen und ein erfindungsgemäßer neuer Chemosensor basierend auf Zeolith L_{3.0} mit einem zweifach positiv geladenen, diazapyrenbasierten Farbstoff unter Verlinkung der einzelnen Farbstoffeinheiten mittels Polymerisation gemäß Beispiel 3b miteinander verglichen.

Es wurde die Änderung der Signalintensität aufgrund der Freisetzung des eingelagerten Farbstoffs nach Zugabe von Salz zum Testmedium gemessen.

Die Messung wurde unter den folgenden Bedingungen durchgeführt: In beiden Fällen wurden die Chemosensoren nach den unter 3b genannten Schritten hergestellt. In beiden Fällen betrug die Farbstoffbeladung des Zeoliths 2.3 wt%. Figur 6 zeigt den Syntheseweg eines der funktionalisierten Farbstoffe - die Polymerisation erfolgt wie in Beispiel 3b beschrieben. Nach Equilibrierung wurde mittels Kinetikmessung die Stabilität des Fluoreszenzsignals (Excitation bei 371 nm, Emission bei 455 nm) detektiert und daraufhin eine stark konzentrierte PBS Lösung zugegeben, sodass in der Küvette die Konzentration von 1X PBS (137 mM NaCl) erreicht wurde.

Die Figuren 5 und 6 zeigen schematisch das zugrundeliegende Prinzip der Kationen-Austauschreaktion in herkömmlichen Chemosensoren gegenüber den neuen erfindungsgemäßen Chemosensoren.

Figur 7 zeigt einen deutlichen Anstieg der Fluoreszenzintensität nach Salzzugabe bei herkömmlichen Chemosensoren, was den Austritt der Farbstoffmoleküle und damit die Aufhebung der leichten Quenchung durch die Zeolithkavitäten signalisiert. Der Chemosensor ist damit nicht mehr funktional (Figur 7, obere Kurve). Die Verringerung der Signalintensität nach der Salzzugabe bei Verwendung eines erfindungsgemäßen neuen Chemosensors mit darin mechanisch verankerten Farbstoffmolekülen bestätigt die Interaktion der derivatisierten Farbstoffe mit den zugefügten Ionen. Der Chemosensor bleibt aber durch die mechanische Verankerung intakt und die Farbstoffmoleküle können nicht verdrängt werden.

### Beispiel 6 - Bestimmung positiv geladener Analyten in physiologischen Medien mit einem erfindungsgemäßen neuen Chemosensor

Der erfindungsgemäße neue Chemosensor gemäß Beispiel 3b wurde zur Bestimmung von positiv geladenen Analyten in verschiedenen physiologischen Medien mit hoher Salzkonzentration eingesetzt.

Die Messungen wurden unter den folgenden Bedingungen durchgeführt: Die verwendeten Chemosensoren wurden nach dem unter 3b beschriebenen Arbeitsschritten in Wasser hergestellt und im Anschluss mit dem Medium, in welchem die Untersuchung stattfinden sollte vermischt. Hierbei ist es sowohl möglich, dass der zu untersuchende Analyt schon in dem Medium vorhanden ist (dies ist zum Beispiel bei Urin von freiwilligen Probanden der Fall) oder der zu untersuchende Analyt erst zugegeben wird (dies ist zum Beispiel bei künstlichem Liquor der Fall). Ist der Analyt schon in dem Medium enthalten, so wurde eine Stocklösung von Serotonin weiter zugegeben, bis alle Farbstoffmoleküle innerhalb des Chemosensor gequencht waren (Konzentration dieser ist bekannt) und die Differenz zwischen der Konzentration der Farbstoffmoleküle und der Konzentration des zugegebenen Analyten entspricht dann der ursprünglichen Serotoninkonzentration im Medium.

Die Messung wurde unter den folgenden Bedingungen durchgeführt:
Figur 8
   (a) Der Chemosensor basierend auf Zeolith L_{3.0} und mit einer Farbstoffbeladung/Polymerisierung wie in Beispiel 3b und 5 beschrieben wurde in Wasser dispergiert und anschließend mit 1.5X PBS vermischt (Endkonzentration 1X PBS). Die Zugabe des nicht-bindenden bzw. bindenden Gastes erfolgte wie in Beispiel 4 erläutert. Die Detektion erfolgte in Einmalküvetten (PP) mittels Fluoreszenzspektrometer.
   (b) Der Chemosensor basierend auf Zeolith L_{3.0} und mit einer Farbstoffbeladung/Polymerisierung wie in Figur 6 beschrieben wurde in 50 mM HEPES Puffer (pH 6.2) dispergiert und anschließend 4:1 mit dem Urin der freiwilligen Probanden vermischt und mittels Platereader Assay vermessen. Die Zugabe des nicht-bindenden bzw. bindenden Gastes erfolgte wie in Beispiel 4 erläutert.
Figur 9
   (a) Der Chemosensor basierend auf Zeolith L_{3.0} und mit einer Farbstoffbeladung/Polymerisierung wie in Beispiel 3b und 5 beschrieben wurde in ursprünglich in Wasser als Medium hergestellt, getrocknet und dann in künstlichem Liquor dispergiert. Der verwendete, künstliche Liquor enthält keine detektierbaren Neurotransmitter. Die Zugabe des nicht-bindenden bzw. bindenden Gastes erfolgte wie in Beispiel 4 erläutert. Die Detektion erfolgte in Einmalküvetten (PP) mittels Fluoreszenzspektrometer.
   (b) Der Chemosensor wurde wie unter Beispiel 9a beschrieben hergestellt und die Enzymreaktion wurde wie unter Beispiel 1b erläutert durchgeführt. Die Detektion erfolgte in Einmalküvetten (PP) mittels Fluoreszenzspektrometer.
Figur 10
   (a) Der Chemosensor basierend auf Zeolith L_{3.0} wurde mit einer Farbstoffbeladung/Polymerisierung wie unter Beispiel 3b und 5 beschrieben in 50 mM HEPES als Medium hergestellt. Das Human Serum wurde 1:2 mit 50 mM HEPES verdünnt (Endkonzentration ca. 500 µM HS) und mit einer Chemosensordispersion (Endkonzentration 250 µg/ml) vermischt. Anschließend wurde wie in Beispiel 4 erläutert Serotonin zu titriert. Excitation bei 420 nm, Detektion bei 522 nm. Die Detektion erfolgte in Einmalküvetten (PP) mittels Fluoreszenzspektrometer.
   (b) Der Chemosensor basierend auf Zeolith L_{3.0} wurde mit einer Farbstoffbeladung/Polymerisierung wie unter Beispiel 3b und 5 beschrieben in 50 mM HEPES als Medium hergestellt. Das Human Serum Albumin wurde filtriert (22 mM Spritzenfilter, PP) und mit einer Chemosensordispersion (Endkonzentration 250 µg/ml) vermischt. Anschließend **wurde wie** in Beispiel 4 erläutert Serotonin zu titriert. Die Detektion erfolgte in Einmalküvetten (PP) mittels Fluoreszenzspektrometer. Excitation bei 420 nm, Detektion bei 522 nm.

Das Ergebnis zeigen die Figuren 8, 9 und 10 für verschiedene Medien und verschiedene Analyten. Die neuen erfindungsgemäßen Chemosensoren können damit in biologischen Medien wie PBS oder künstlichem Liquor, aber auch direkt in körpereigenen Flüssigkeiten mit hoher Salzkonzentration, wie Urin oder Blutserum, eingesetzt werden.

### Beispiel 7 - Bestimmung neutraler und zwitterionischer Analyten mit einem erfindungsgemäßen neuen Chemosensor

Der erfindungsgemäße neue Chemosensor basierend auf homogenisiertem Zeolith Y₁₅ gemäß Beispiel 3b wurde zur Bestimmung von neutralen und zwitterionischen Analyten eingesetzt.

Die Messungen wurden unter den folgenden Bedingungen durchgeführt: Die Chemosensoren wurden basierend auf dem unter 3b beschriebenen Verfahren hergestellt. Daraufhin wurden Chemosensorkonzentrationen von 250 µg/ml mit einer relativen Farbstoffbeladung von 2.3wt% in Wasser eingestellt und der zu bestimmende neutrale beziehungsweise zwitterionische Analyt (jeweils 1 mM Stammlösung) zu titriert. Analog konnte das Experiment auch in 1X PBS durchgeführt werden. Die Detektion erfolgte in Einmalküvetten (PP) mittels Fluoreszenzspektrometer.

Die Figur 11 zeigt schematisch das zugrundeliegende Prinzip der Bindung in Chemosensoren mit unterschiedlichen Si/Al-Verhältnissen. Das Ergebnis der Bestimmungen zeigen die Figuren 12a, 12b, 12c und 13.

## Patentansprüche

1. Verfahren zur Bestimmung neutraler, zwitterionischer und/oder positiv geladener Bioanalyten durch UV-Vis- oder Fluoreszenzspektroskopie unter Verwendung monodisperser Nanozeolithe mit einer Partikelgrößenverteilung im Bereich von 5 bis 400 nm, bestimmt mittels dynamischer Lichtstreuung wie in der Beschreibung offenbart, worin die monodispersen Nanozeolithe mit Indikatormolekülen mit funktionalisierten Endgruppen, die innerhalb der Zeolithkavitäten dimerisiert oder polymerisiert und in den Kavitäten der monodispersen Nanozeolithe sterisch verankert vorliegen, dotiert sind.

2. Verfahren nach Anspruch 1, zur Bestimmung neutraler, zwitterionischer und/oder positiv geladener Bioanalyten in salinen Medien, bevorzugt ausgewählt aus physiologischen Medien, körpereigenen Flüssigkeiten und körpereigenen Sekreten, bevorzugter ausgewählt aus PBS, Urin, Speichel, Blut, Schweiß, Sperma, Fruchtwasser, Tränenflüssigkeit und Liquor.

3. Verfahren nach einem der vorhergehenden Ansprüche, worin die zu bestimmenden Bioanalyten biogene und bioaktive Moleküle sind, die ausgewählt sind aus den Gruppen der Hormone, Fette, Metabolite, Neurotransmitter und bioaktiven Wirkstoffe.

4. Verfahren nach einem der vorhergehenden Ansprüche, worin die zu bestimmenden Bioanalyten ausgewählt sind aus der Gruppe bestehend aus Serotonin, Dopamin, Tryptamin, Tyramin, Epinephrin, Norepinephrin, Phenylephrin, Octopamin, Phenethylamin, Histamin, Nicotin, Propanolol, L-DOPA, Phenylalanin, Tyrosin, Histidin, Tryptophan (Trp), TrpNH₂, 5-HTP, TrpGly, Indol, Indol-3-Essigsäure, Melatonin, Adenosin, Estradiol, Propanil, Catechol, Paracetamol, Acetylcholin, Glycin (Gly), D-Serin, Aspartat, Glutamat, GABA, Cadaverin, Ethanolamin und Glucose, bevorzugt Serotonin und Dopamin.

5. Verfahren nach einem der vorhergehenden Ansprüche, worin die Indikatormoleküle mit funktionalisierten Endgruppen, die innerhalb der Zeolithkavitäten dimerisiert oder polymerisiert vorliegen, funktionalisierte Gruppen aufweisen die folgende Reaktionen untereinander ermöglichen:
- Disulfidbrücken-Bildung
- Maleimide-Thiol-Reaktion
- Epoxid-Thiol-Reaktion / Epoxid-Amin-Reaktion
- Haloacetamid- oder Alkylhalogenid Thiol-Reaktion
- Vinylsulfon-, Acrylat-/Acrylamid-Thiol-Reaktion
- Amin-Isothiocyanat-Reaktion
- Aldehyd-Amin-Reaktion zu Hydrazon oder Imin
- NHS-Ester mit Amin.

6. Verfahren nach einem der vorhergehenden Ansprüche, worin die monodispersen Nanozeolithe eine Partikelgrößenverteilung im Bereich von 5 bis 200 nm aufweisen.

7. Verfahren nach einem der vorhergehenden Ansprüche, worin
(i) die monodispersen Nanozeolithe ein Si/Al-Verhältnis von 0,5 bis 50 aufweisen;
oder
(ii) die zu bestimmenden Bioanalyten ausgewählt sind aus der Gruppe positiv geladener Bioanalyte und die dotierten monodispersen Nanozeolithe ein Si/Al-Verhältnis von 0,5 bis 50, bevorzugt von 1 bis 50, aufweisen;
oder
(iii) die zu bestimmenden Bioanalyten ausgewählt sind aus der Gruppe neutraler oder zwitterionischer Bioanalyte und die dotierten monodispersen Nanozeolithe ein Si/Al-Verhältnis von 10 bis 20, bevorzugt von 15 bis 20, aufweisen.

8. Verfahren nach einem der vorhergehenden Ansprüche, worin die monodispersen Nanozeolithe in Form einer kolloidalen Dispersion der dotierten monodispersen Nanozeolithpartikel in einem wässrigen Medium vorliegen, oder in Form einer mittels Sprüh- oder Aerosoldruckverfahren erhältlichen Schicht der dotierten monodispersen Nanozeolithpartikel aus einer kolloidalen Dispersion in einem wässrigen Medium auf einem Träger.

9. Verfahren nach einem der vorhergehenden Ansprüche, worin Bestimmung der Bioanalyten mittels UV-Vis-Spektroskopie erfolgt.

10. Verfahren nach einem der vorhergehenden Ansprüche, umfassend die Schritte
i) Bereitstellung oder Herstellung einer Dispersion der dotierten monodispersen Nanozeolithe mit einer Partikelgrößenverteilung im Bereich von 5 bis 400 nm, worin die Indikatormoleküle mit funktionalisierten Endgruppen innerhalb der Zeolithkavitäten dimerisiert oder polymerisiert und in den Kavitäten der monodispersen Nanozeolithe sterisch verankert vorliegen, in einem wässrigen Medium oder in einem salinen Medium, wie in einem der vorhergehenden Ansprüche definiert, welches die zu bestimmenden Bioanalyten bereits enthalten kann;
ii) ggf. Zugabe der Dispersion gemäß i) zu dem die zu bestimmenden Bioanalyten enthaltenden Medium;
iii) ggf. Herstellung einer Schicht aus der Dispersion gemäß i) oder ii) mittels Sprühverfahren oder Aerosoldruckverfahren auf einem Träger;
iv) Bestimmung der Bioanalyten in der Dispersion gemäß i), ii) oder in der Schicht gemäß iii) mittels UV-Vis- oder Fluoreszenzspektroskopie, bevorzugt mittels UV-Vis-Spektroskopie.

11. Verfahren nach Anspruch 10, worin vor dem Schritt i) die monodispersen Nanozeolithe hergestellt werden durch Zerkleinerung eines Zeolithmaterials auf eine monodisperse Partikelgrößenverteilung im Bereich von 5 bis 400 nm mittels Sonikation mit hoher Schallintensität, bevorzugt mit einer Arbeitsfrequenz ≥30 kHz und einer Energiedichte ≥300 W cm², und die Dispersion aus Schritt i) einer sterilen Hochdruckfiltration unterworfen wird und worin die Indikator-Dotierung vor oder nach der Sonikation mit hoher Schallintensität erfolgt.

12. Monodisperse Nanozeolithe mit einer Partikelgrößenverteilung im Bereich von 5 bis 400 nm, bestimmt mittels dynamischer Lichtstreuung wie in der Beschreibung offenbart, worin die monodispersen Nanozeolithe mit Indikatormolekülen mit funktionalisierten Endgruppen, die innerhalb der Zeolithkavitäten dimerisiert oder polymerisiert und in den Kavitäten der monodispersen Nanozeolithe sterisch verankert vorliegen, dotiert sind und Chemosensoren zur spektroskopischen Fluoreszenz oder UV-Vis-Detektion positiv geladener, zwitterionischer und neutraler biogener oder bioaktiver Moleküle und Wirkstoffe bilden.

13. Monodisperse Nanozeolithe gemäß Anspruch 12, worin die monodispersen Nanozeolithe
(i) eine Partikelgrößenverteilung im Bereich von 5 bis 200 nm aufweisen; und/oder
(ii) ein Si/Al-Verhältnis von 0,5 bis 50, oder von 1 bis 50 oder von 10 bis 20 oder von 15 bis 20, aufweisen; und/oder
(iii) in Form
- einer kolloidalen Dispersion der dotierterten monodispersen Nanozeolithpartikel in einem wässrigen Medium oder
- einer mittels Sprüh- oder Aerosoldruckverfahren erhältlichen Schicht der dotierten monodispersen Nanozeolithpartikel aus einer kolloidalen Dispersion in einem wässrigen Medium auf einem Träger
vorliegen.

14. Verwendung der monodispersen Nanozeolithe gemäß Anspruch 12 oder 13 zur Bestimmung neutraler, zwitterionischer und/oder positiv geladener Bioanalyten durch UV-Vis- oder Fluoreszenzspektroskopie in salinen Medien, bevorzugt in salinen Medien die ausgewählt sind aus physiologischen Medien, körpereigenen Flüssigkeiten und körpereigenen Sekreten, bevorzugte in salinen Medien die ausgewählt sind aus PBS, Urin, Speichel, Blut, Schweiß, Sperma, Fruchtwasser, Tränenflüssigkeit und Liquor.

15. Verwendung nach Anspruch 14 worin die zu bestimmenden Bioanalyten biogene und bioaktive Moleküle sind, die ausgewählt sind aus den Gruppen der Hormone, Fette, Metabolite, Neurotransmitter und bioaktiven Wirkstoffe, bevorzugt ausgewählt aus der Gruppe bestehend aus Serotonin, Dopamin, Tryptamin, Tyramin, Epinephrin, Norepinephrin, Phenylephrin, Octopamin, Phenethylamin, Histamin, Nicotin, Propanolol, L-DOPA, Phenylalanin, Tyrosin, Histidin, Tryptophan (Trp), TrpNH₂, 5-HTP, TrpGly, Indol, Indol-3-Essigsäure, Melatonin, Adenosin, Estradiol, Propanil, Catechol, Paracetamol, Acetylcholin, Glycin (Gly), D-Serin, Aspartat, Glutamat, GABA, Cadaverin, Ethanolamin und Glucose, bevorzugt Serotonin und Dopamin.

## Claims

1. A method for the determination of neutral, zwitterionic and/or positively charged bioanalytes by UV-Vis or fluorescence spectroscopy using monodisperse nanozeolites with a particle size distribution in the range of 5 to 400 nm, as determined by dynamic light scattering as disclosed in the description, wherein the monodisperse nanozeolites are doped with indicator molecules having functionalised terminal groups which dimerise or polymerise within the zeolite cavities and are sterically anchored within the cavities of the monodisperse nanozeolites.

2. The method according to claim 1, for the determination of neutral, zwitterionic and/or positively charged bioanalytes in saline media, preferably selected from physiological media, body fluids and body secretions, more preferably selected from PBS, urine, saliva, blood, sweat, semen, amniotic fluid, tear fluid and cerebrospinal fluid.

3. The method according to any one of the preceding claims, wherein the bioanalytes to be determined are biogenic and bioactive molecules selected from the groups comprising hormones, lipids, metabolites, neurotransmitters and bioactive substances.

4. The method according to any one of the preceding claims, wherein the bioanalytes to be determined are selected from the group consisting of serotonin, dopamine, tryptamine, tyramine, epinephrine, norepinephrine, phenylephrine, octopamine, phenethylamine, histamine, nicotine, propanolol, L-DOPA, phenylalanine, tyrosine, histidine, tryptophan (Trp), TrpNH₂, 5-HTP, TrpGly, indole, indole-3-acetic acid, melatonin, adenosine, oestradiol, propanil, catechol, paracetamol, acetylcholine, glycine (Gly), D-serine, aspartate, glutamate, GABA, cadaverine, ethanolamine and glucose, preferably serotonin and dopamine.

5. The method according to any of the preceding claims, wherein the indicator molecules, having functionalised terminal groups which dimerise or polymerise within the zeolite cavities, possess functionalised groups that enable the following reactions to occur between them:
- disulphide bridge formation
- maleimide-thiol reaction
- epoxide-thiol reaction / epoxide-amine reaction
- haloacetamide or alkyl halide-thiol reaction
- vinylsulphone, acrylate/acrylamide-thiol reaction
- amine-isothiocyanate reaction
- aldehyde-amine reaction to form a hydrazone or imine
- NHS ester with an amine.

6. The method according to any of the preceding claims, wherein the monodisperse nanozeolites have a particle size distribution in the range of 5 to 200 nm.

7. The method according to one of the preceding claims, wherein
(i) the monodisperse nanozeolites have a Si/Al ratio of between 0.5 and 50; or
(ii) the bioanalytes to be determined are selected from the group of positively charged bioanalytes, and the doped monodisperse nanozeolites have a Si/Al ratio of 0.5 to 50, preferably 1 to 50; or
(iii) the bioanalytes to be determined are selected from the group of neutral or zwitterionic bioanalytes, and the doped monodisperse nanozeolites have a Si/Al ratio of 10 to 20, preferably 15 to 20.

8. The method according to one of the preceding claims, wherein the monodisperse nanozeolites are present in the form of a colloidal dispersion of the doped monodisperse nanozeolite particles in an aqueous medium, or in the form of a layer of the doped monodisperse nanozeolite particles, obtained by a spray or aerosol deposition process from a colloidal dispersion in an aqueous medium, deposited onto a substrate.

9. The method according to one of the preceding claims, the bioanalytes are determined by UV-Vis spectroscopy.

10. The method according to one of the preceding claims, comprising the steps of
i) providing or preparing a dispersion of doped monodisperse nanozeolites with a particle size distribution in the range of 5 to 400 nm, wherein the indicator molecules with functionalised terminal groups are dimerised or polymerised within the zeolite cavities and are sterically anchored within the cavities of the monodisperse nanozeolites, in an aqueous medium or in a saline medium, as defined in one of the preceding claims, which may already contain the bioanalytes to be determined;
ii) if applicable, add the dispersion as described in (i) to the medium containing the bioanalytes to be determined;
iii) if applicable, forming a layer from the dispersion as described in (i) or (ii) by a spray or aerosol deposition process on a substrate;
iv) determining the bioanalytes in the dispersion as per (i) or (ii), or in the layer as per (iii), by means of UV-Vis or fluorescence spectroscopy, preferably by means of UV-Vis spectroscopy.

11. The method according to claim 10, wherein prior to step i), the monodisperse nanozeolites are produced by comminuting a zeolite material to a monodisperse particle size distribution in the range of 5 to 400 nm through high-intensity sonication, preferably at an operating frequency of ≥30 kHz and an energy density of ≥300 W cm2, and the dispersion from step i) is subjected to sterile high-pressure filtration, and wherein the indicator doping takes place either before or after the high-intensity sonication.

12. Monodisperse nanozeolites with a particle size distribution in the range of 5 to 400 nm, determined by dynamic light scattering as disclosed in the description, wherein the monodisperse nanozeolites are doped with indicator molecules having functionalised terminal groups, which dimerise or polymerise within the zeolite cavities and are sterically anchored within the cavities of the monodisperse nanozeolites, and form chemosensors for the spectroscopic fluorescence or UV-Vis detection of positively charged, zwitterionic and neutral biogenic or bioactive molecules and substances.

13. Monodisperse nanozeolites according to claim 12, wherein the monodisperse nanozeolites
(i) have a particle size distribution in the range of 5 to 200 nm; and/or
(ii) have a Si/Al ratio of 0.5 to 50, or of 1 to 50, or of 10 to 20, or of 15 to 20; and/or
(iii) are present in the form of
- a colloidal dispersion of the doped monodisperse nanozeolites in an aqueous medium or
- a layer of doped monodisperse nanozeolites in a colloidal dispersion in an aqueous medium on a carrier obtainable by a spray or aerosol deposition process.

14. Use of the monodisperse nanozeolites according to claim 12 or 13 for the determination of neutral, zwitterionic and/or positively charged bioanalytes by UV-Vis or fluorescence spectroscopy in saline media, preferably in saline media selected from physiological media, body fluids and body secretions, preferably in saline media selected from PBS, urine, saliva, blood, sweat, semen, amniotic fluid, tear fluid and cerebrospinal fluid.

15. Use according to claim 14, wherein the bioanalytes to be determined are biogenic and bioactive molecules selected from the groups comprising hormones, lipids, metabolites, neurotransmitters and bioactive substances, preferably selected from the group consisting of serotonin, dopamine, tryptamine, tyramine, epinephrine, norepinephrine, phenylephrine, octopamine, phenethylamine, histamine, nicotine, propanolol, L-DOPA, phenylalanine, tyrosine, histidine, tryptophan (Trp), TrpNH2, 5-HTP, TrpGly, indole, indole-3-acetic acid, melatonin, adenosine, oestradiol, propanil, catechol, paracetamol, acetylcholine, glycine (Gly), D-serine, aspartate, glutamate, GABA, cadaverine, ethanolamine and glucose, preferably serotonin and dopamine.

## Revendications

1. Procédé de détermination de bioanalytes neutres, zwitterioniques et/ou chargés positivement par spectroscopie UV-Vis ou par spectroscopie de fluorescence, en utilisant des nanozéolithes monodispersés présentant une distribution granulométrique comprise entre 5 et 400 nm, déterminée par diffusion dynamique de la lumière comme décrit dans la description, dans lequel les nanozéolithes monodispersées sont dopées avec des molécules indicatrices dotées de groupes terminaux fonctionnalisés, qui sont dimérisées ou polymérisées à l'intérieur des cavités des zéolithes et sont ancrées stériquement dans les cavités des nanozéolithes monodispersées.

2. Procédé selon la revendication 1, destiné à la détermination de bioanalytes neutres, zwitterioniques et/ou chargés positivement dans des milieux salins, choisis de préférence parmi les milieux physiologiques, les liquides corporels et les sécrétions corporelles, et plus particulièrement parmi le PBS, l'urine, la salive, le sang, la sueur, le sperme, le liquide amniotique, le liquide lacrymal et le liquide céphalo-rachidien.

3. Procédé selon l'une des revendications précédentes, dans lequel les bioanalytes à déterminer sont des molécules biogènes et bioactives choisies parmi les groupes des hormones, des lipides, des métabolites, des neurotransmetteurs et des principes actifs bioactifs.

4. Procédé selon l'une des revendications précédentes, dans lequel les bioanalytes à déterminer sont choisis parmi le groupe constitué de sérotonine, dopamine, tryptamine, tyramine, épinéphrine, norépinéphrine, phényléphrine, octopamine, phénéthylamine, histamine, nicotine, propanolol, L-DOPA, phénylalanine, tyrosine, histidine, tryptophane (Trp), TrpNH₂, 5-HTP, TrpGly, indole, acide indole-3-acétique, mélatonine, adénosine, estradiol, propanil, catéchol, paracétamol, acétylcholine, glycine (Gly), D-sérine, aspartate, glutamate, GABA, cadavérine, éthanolamine et glucose, de préférence sérotonine et dopamine.

5. Procédé selon l'une des revendications précédentes, dans lequel les molécules indicatrices comportant des groupes terminaux fonctionnalisés, qui sont dimérisées ou polymérisées à l'intérieur des cavités de la zéolite, possèdent des groupes fonctionnalisés permettant les réactions suivantes entre eux:
- formation de ponts disulfure
- réaction maléimide-thiol
- réaction époxyde-thiol / réaction époxyde-amine
- réaction halogénoacétamide ou halogénure d'alkyle-thiol
- réaction vinylsulfone, acrylate/acrylamide-thiol
- réaction amine-isothiocyanate
- réaction aldéhyde-amine donnant de l'hydrazone ou de l'imine
- esters NHS avec une amine.

6. Procédé selon l'une des revendications précédentes, dans lequel les nanozéolithes monodispersées présentent une distribution granulométrique comprise entre 5 et 200 nm.

7. Procédé selon l'une des revendications précédentes, dans lequel
(i) les nanozéolithes monodispersées présentent un rapport Si/Al compris entre 0,5 et 50;
ou
(ii) les bioanalytes à déterminer sont choisis parmi le groupe des bioanalytes chargés positivement et les nanozéolithes monodispersées dopées présentent un rapport Si/Al compris entre 0,5 et 50, de préférence entre 1 et 50;
ou
(iii) les bioanalytes à déterminer sont choisis parmi le groupe des bioanalytes neutres ou zwitterioniques et les nanozéolithes monodispersées dopées présentent un rapport Si/Al compris entre 10 et 20, de préférence entre 15 et 20.

8. Procédé selon l'une des revendications précédentes, dans lequel les nanozéolithes monodispersées se présentent sous la forme d'une dispersion colloïdale de particules de nanozéolithes monodispersées dopées dans un milieu aqueux, ou sous la forme d'une couche de particules de nanozéolithes monodispersées dopées déposée sur un support, obtenue par un procédé de pulvérisation ou d'aérosol sous pression à partir d'une dispersion colloïdale dans un milieu aqueux.

9. Procédé selon l'une des revendications précédentes, dans lequel la détermination des bioanalytes s'effectue par spectroscopie UV-Vis.

10. Procédé selon l'une des revendications précédentes, comprenant les étapes suivantes :
i) préparation ou fabrication d'une dispersion de nanozéolithes monodispersées dopées présentant une distribution granulométrique comprise entre 5 et 400 nm, dans laquelle les molécules indicatrices dotées de groupes terminaux fonctionnalisés sont dimérisées ou polymérisées à l'intérieur des cavités des zéolithes et sont ancrées stériquement dans les cavités des nanozéolithes monodispersées, dans un milieu aqueux ou dans un milieu salin, tel que défini dans l'une des revendications précédentes, qui peut déjà contenir les bioanalytes à déterminer;
ii) le cas échéant, ajout de la dispersion selon i) au milieu contenant les bioanalytes à déterminer;
iii) le cas échéant, formation d'une couche à partir de la dispersion selon i) ou ii) par un procédé de pulvérisation ou un procédé de pression d'aérosol sur un support;
iv) détermination des bioanalytes dans la dispersion selon i), ii) ou dans la couche selon iii) par spectroscopie UV-Vis ou par spectroscopie de fluorescence, de préférence par spectroscopie UV-Vis.

11. Procédé selon la revendication 10, dans lequel, avant l'étape i), les nanozéolithes monodispersées sont préparées par broyage d'un matériau zéolithique jusqu'à obtenir une distribution granulométrique monodispersée comprise entre 5 et 400 nm au moyen d'une sonication à haute intensité acoustique, de préférence avec une fréquence de travail ≥ 30 kHz et une densité d'énergie ≥ 300 W cm² , et la dispersion issue de l'étape i) est soumise à une filtration stérile à haute pression, et dans lequel le dopage par indicateur est effectué avant ou après la sonication à haute intensité acoustique.

12. Nanozéolithes monodispersées présentant une distribution granulométrique comprise entre 5 et 400 nm, déterminée par diffusion dynamique de la lumière comme décrit dans la description, dans lesquelles les nanozéolithes monodispersées sont dopées avec des molécules indicatrices dotées de groupes terminaux fonctionnalisés, qui sont dimérisées ou polymérisées à l'intérieur des cavités des zéolithes et sont ancrées stériquement dans les cavités des nanozéolithes monodispersées, et forment des chimiosenseurs pour la détection spectroscopique par fluorescence ou UV-Vis de molécules et de principes actifs biogènes ou bioactifs chargés positivement, zwitterioniques et neutres.

13. Nanozéolithes monodispersées selon la revendication 12, dans lesquelles les nanozéolithes monodispersées
(i) présentent une distribution granulométrique comprise entre 5 et 200 nm;
et/ou
(ii) présentent un rapport Si/Al compris entre 0,5 et 50, ou entre 1 et 50, ou entre 10 et 20, ou entre 15 et 20;
et/ou
(iii) se présentent sous la forme
- d'une dispersion colloïdale des nanoparticules de zéolite monodispersées et dopées dans un milieu aqueux ou
- d'une couche de particules de nanozéolite monodispersées dopées déposée sur un support, obtenue par un procédé de pulvérisation ou de projection d'aérosol à partir d'une dispersion colloïdale dans un milieu aqueux.

14. Utilisation des nanozéolithes monodispersées selon la revendication 12 ou 13 pour la détermination de bioanalytes neutres, zwitterioniques et/ou chargés positivement par spectroscopie UV-Vis ou par spectroscopie de fluorescence dans des milieux salins, de préférence dans des milieux salins choisis parmi les milieux physiologiques, les fluides et sécrétions de l'organisme, de préférence dans des milieux salins choisis parmi le PBS, l'urine, la salive, le sang, la sueur, le sperme, le liquide amniotique, le liquide lacrymal et le liquide céphalo-rachidien.

15. Utilisation selon la revendication 14, dans laquelle les bioanalytes à déterminer sont des molécules biogènes et bioactives choisies parmi les groupes des hormones, des lipides, des métabolites, des neurotransmetteurs et des principes actifs bioactifs, de préférence choisies parmi le groupe constitué de sérotonine, dopamine, tryptamine, tyramine, épinéphrine, norépinéphrine, phényléphrine, octopamine, phénéthylamine, histamine, nicotine, propanolol, L-DOPA, phénylalanine, tyrosine, histidine, tryptophane (Trp), TrpNH₂, 5-HTP, TrpGly, indole, acide indole-3-acétique, mélatonine, adénosine, l'estradiol, propanil, catéchol, paracétamol, acétylcholine, glycine (Gly), l-sérine, aspartate, glutamate, GABA, cadavérine, éthanolamine et glucose, de préférence lsérotonine et dopamine.
